Europäisches Patentamt

European Patent Office

Office européen des brevets

(19)

(11) Veröffentlichungsnummer: **0 001 382**
**A2**

(12) # EUROPÄISCHE PATENTANMELDUNG

(21) Anmeldenummer: 78100054.2

(22) Anmeldetag: 01.06.78

(51) Int. Cl.²: **F 25 B 9/00, F 25 B 7/00,**
**F 25 B 27/00, F 03 G 7/00,**
**F 01 K 25/10**

(30) Priorität: 11.10.77 DE 2745700
30.05.78 DE 2823447

(71) Anmelder: Leczkowski, Kurt, Ungererstrasse 66,
D-8000 München 40 (DE)

(43) Veröffentlichungstag der Anmeldung: 18.04.79
Patentblatt 79/8

(72) Erfinder: Leczkowski, Kurt, Ungererstrasse 66, D-8000
München 40 (DE)

(84) Benannte Vertragsstaaten: BE CH FR GB NL SE

(54) Verfahren und Anlagen zur Gewinnung von Nutzarbeit und/oder Nutzkälte aus Wärme.

(57) Verfahren und Anlagen zur Gewinnung von Nutzarbeit und/oder Nutzkälte aus Wärme mittels thermodynamischer Kreisprozesse wobei die Arbeitsgase vornehmlich adiabatischen aber auch isothermischen und polytropischen Zustandsänderungen unterworfen werden, vornehmlich im Temperaturgebiet zwischen Aussentemperatur und absolutem Nullpunkt. Die abgekühlten, entspannten Arbeitsgase werden durch Aussenwärme laufend wieder auf die Ausgangstemperatur bei Ausgangsdruck aufgeheizt. Die bei der Expansion anfallende Kälte kann auch als Nutzkälte, zum Beispiel für Meerwasserentsalzung, Verwendung finden. Ausserhalb des Erdbereiches wird Sonnenstrahlungsenergie in ähnlichen thermodynamischen Prozessen in Nutzarbeit umgewandelt.

Fig. 8

Verfahren und Anlagen zur Gewinnung von Nutzarbeit und/oder Nutzkälte aus Wärme

### A. Vorgeschichte und Aufgabe

Die vorliegende Erfindung hat eine längere Vorgeschichte, in der die Aufgaben sich mehrfach wandelten. - Es begann im ersten Weltkrieg, in dem der Erfinder eine Beobachtung machte, die zu dem damals wohl neuen Gedanken führte, das Problem der Entsalzung von Meerwasser nach dem Beispiel der Entstehung von Eisbergen durch Ausfrieren des reinen Wassers bei $0^{\circ}C$ zu lösen. So entstand die ursprüngliche Aufgabe: "Wie gewinnt man grosse Mengen von Nutzkälte mit geringem Aufwand"? - Auf den Gedanken, Nutzkälte bei der Erzeugung von Nutzarbeit aus Wärme nebenbei, d.h. ohne besonderen Energieaufwand zu gewinnen, führte den Erfinder erstmalig die Beschäftigung mit Druckluft-Kraftübertragungs-Prozessen, die später ausführlicher erörtert werden sollen. - Dann wurde die alte Dampfmaschine unter die Lupe genommen, die immer noch eine beherrschende Stellung in unserer Energieversorgung einnimmt, obgleich alle Wasserdampf-Kraftmaschinen zwei schwerwiegende Nachteile aufweisen: erstens den ganz miserablen thermischen Wirkungsgrad und zweitens den Übelstand, dass die im Wasserdampf-Kreisprozess nicht in Nutzarbeit umsetzbare Wärme im Kühlwasser abgeführt und vernichtet werden muss, was zu erheblichen ökologischen Störungen führt. - - Zu diesen Überlegungen gesellte sich die weitere Frage: Kann die heutige Menschheit es gegenüber künftigen Generationen verantworten, in einem sich steigernden Umfang Raubbau zu treiben an unersetzbaren Bodenschätzen des Erdballs wie Kohle, Erdöl, Erdgas, während die durch die laufende Sonnenstrahlung der Erde zuströmende Energie und die z.B. in den Weltmeeren gespeicherte Aussenwärme nahezu unausgenutzt bleiben?

- 2 -                        0001382

Die nach dem zweiten Weltkrieg einsetzenden Satellitenflüge um die Erde, auf den Mond und in den benachbarten
planetarischen Weltraum führten dann noch zu dem Wunsch,
auch auf den Satelliten oder auf anderen Himmelskörpern
Nutzarbeit aus der Sonnenstrahlung zu gewinnen. - - So
wandelte sich der A u f g a b e n k o m p l e x schliesslich zur folgenden Fassung:

"Gesucht werden Verfahren und Anlagen zur laufenden
Gewinnung von Nutzarbeit und/oder Nutzkälte aus verschiedenen Wärmequellen wie Sonnenstrahlung, Aussenwärme (das
ist die Wärme der Erdoberfläche, der Gewässer und Meere,
der Atmosphäre), Brennstoffe, Kernenergie, Speicherenergie,
Wärme des Erdinnern und andere, bei mannigfach gegebenen
geographischen, klimatischen, tages- und jahreszeitlichen
und anderen wechselnden Verhältnissen auf der Erde und/oder
in der Sphäre der Erdsatelliten, auf dem Monde, den Planeten,
im Weltraum, bei gutem thermischen Wirkungsgrad und ohne
ökologische Störungen durch unausgenützte Abwärme, wobei
auch noch die folgenden Möglichkeiten vorgesehen sein sollen:

a) soweit als möglich und tunlich Sonnenstrahlung und/
oder Aussenwärme bevorzugt auszunutzen;

b) bei zeitweiliger Verringerung des Bedarfes an Nutzarbeit die in den Anlagen verfügbaren, aber nicht sofort
benötigten Mengen an Sonnenstrahlungswärme und/oder Aussenwärme so zu speichern, dass sie bei später eintretendem
Bedarf (z.B. Spitzenbelastung der Anlagen) als zusätzliche
Nutzarbeit dienstbar gemacht werden können;

c) im Bereich der Erde ausser Nutzarbeit auch noch Nutzkälte in optimalen Mengen ohne Mehraufwand von Energie zu
gewinnen."

Dieser vorstehende Aufgabenkomplex ist neu, erfinderisch
und hat einen technischen Fortschritt von hohem Ausmasse
zum Gegenstand.

B. Der allgemeine Lösungsgedanke

Auf der langjährigen Suche nach Lösungen für den sich
wandelnden und immer mehr erweiternden Aufgabenkomplex
stiess der Erfinder auf eine Reihe von Lehren und Erkenntnissen, von denen nachstehend sechs (a bis f) angeführt
werden:

a) Der t h e r m i s c h e Wirkungsgrad ($\eta$) eines thermodynamischen Kreisprozesses zur Gewinnung von Arbeit aus Wärme ist nach der Lehre

$$\eta = 1 - T_{min} / T_{max}$$

umso grösser, je tiefer die unterste Temperaturstufe ($T_{min}$) des Prozesses liegt. - Daraus ergibt sich die Forderung, Kreisprozesse und Arbeitsmedien so auszuwählen und einzurichten, dass die tiefste Temperaturstufe des Prozesses tunlichst dem absoluten Nullpunkt angenähert wird.

b) Beim D r u c k l u f t - K r a f t ü b e r t r a - g u n g s - P r o z e s s wird Aussenluft in einem Kompressor möglichst isothermisch komprimiert und in einem Kessel gesammelt. Aus dieser komprimierten Luft von ungefähr Aussentemperatur wird dann durch adiabatische Expansion auf Atmosphärendruck Nutzarbeit gewonnen. Bei diesem Vorgang kühlt sich die Druckluft so weit ab, dass die durch die Temperatur-Verringerung verlorene Wärmemenge dem Äquivalent der gewonnenen Arbeit entspricht. Daraus folgt, dass die im Druckluft-Prozess erzielte Nutzarbeit zur Gänze aus der Aussenwärme stammt und nicht etwa aus der Kompressionsarbeit. Diese letztere wird vielmehr im Kompressor vollständig in Wärme umgesetzt. Von dieser Kompressionswärme wird der grösste Teil im Kühlwasser abgeführt, und nur ein kleiner Teil bewirkt eine geringe Temperaturerhöhung der Pressluft, weil eine vollkommene isothermische Kompression in der Praxis nicht erreicht werden kann. - Das Gesetz von der Erhaltung der Energie ist in beiden Teilprozessen streng gewahrt: einmal bei der Umwandlung der Kompressionsarbeit in die Kompressionswärme und das andere Mal bei Umwandlung der gespannten Luft von annähernd Aussentemperatur in Arbeit durch adiabatische Expansion. - Aus diesen Überlegungen zog der Erfinder die Lehre, dass in thermodynamischen Kreisprozessen grundsätzlich aus der Aussenwärme sowohl Nutzarbeit als auch Nutzkälte gewonnen werden kann, sofern die Bedingung erfüllt ist, dass jene Prozessstufen, in denen durch adiabatische Entspannung des Arbeitsmediums (im vorliegenden Falle: Luft) Arbeit gewonnen werden soll, auf den Temperaturbereich zwischen Aussentemperatur und absolutem Nullpunkt verlegt werden.

c) Im Gegensatz zu Wasserdampf-Kreisprozessen verursachen thermodynamische Kreisprozesse zur Gewinnung von Nutzarbeit aus Wärme, die zur Gänze oder überwiegend in Temperaturgebieten zwischen Aussentemperatur und absolutem Nullpunkt ablaufen, keinerlei ö k o l o g i s c h e S t ö r u n g e n durch unverwertete Abwärme. -

d) Soweit Wärmekraft-Kreisprozesse auf Erden zur Gewinnung von Nutzarbeit unterhalb der Aussentemperatur verlaufen, entziehen sie der Umgebung die äquivalenten Mengen von Wärmeenergie. Dadurch werden entsprechende Mengen von N u t z k ä l t e frei, die z.B. für Zwecke der Meerwasser-Entsalzung ausgenützt werden können.

e) Unter dem Namen " W ä r m e - P u m p e " wurde vor einigen Jahrzehnten ein thermodynamisches Verfahren bekannt, welches erstmalig einen Weg wies, wie die Aussenwärme, insbesondere die Wärme von Gewässern, dadurch nutzbar gemacht werden kann, dass durch einen besonderen (linksläufigen) Kreisprozess Wärme aus Temperaturgebieten der Aussentemperatur oder darunter auf Gebiete über der Aussentemperatur "gepumpt" wird. Der Antrieb solcher Anlagen erfolgt meist durch Elektromotoren. - Der erzielte Vorteil besteht darin, dass besonders für Heizzwecke auf Kosten der Aussenwärme (von Gewässern) Wärmemengen von Temperaturen über Aussentemperatur erreicht werden können, wobei die gewonnenen Wärmemengen beträchtlich höher liegen, als dem Äquivalent der Leistung des elektrischen Antriebes entsprechen würde. - Die Kombination erfindungsgemässer Anlagen mit solchen Wärmepumpen-Anlagen ist insbesondere für Heizanlagen aussichtsreich. (Siehe Abschnitt E.)

f) Eine Entdeckung aus neuester Zeit ist das Problem der W ä r m e - R o h r e (Heat-Pipes) in Verbindung mit darin eingeschlossenen Kapillar-Strukturen. Dieser neue Komplex erscheint wichtig genug, um unabhängig von den traditionellen Wärmetauschern in einem besonderen Abschnitt ausführlicher behandelt zu werden. (Siehe Abschnitt D.)

Der Kern des gefundenen a l l g e m e i n e n L ö s u n g s g e d a n k e n s für den gesamten (universellen) Aufgabenkomplex wird durch die nachstehenden sechs Kennzeichen wiedergegeben:

(1) Die Umwandlung von Wärme in Nutzarbeit erfolgt in mindestens einem thermodynamischen Kreisprozess, dessen zeitlicher Ablauf im Temperatur-Entropie-Diagramm im Sinne des Uhrzeigers (rechtsläufig) erfolgt.

(2) Als Arbeitsmedien solcher Kreisprozesse werden Gase oder Gasgemische ausgewählt, deren Tripelpunkte dem absoluten Nullpunkt tunlich nahekommen.

(3) Auf Erden verlaufen die rechtsläufigen Kreisprozesse zur Gänze oder zu einem erheblichen Teil im Temperaturbereich zwischen Aussentemperatur und absolutem Nullpunkt.

(4) Ausserhalb der Erdsphäre wird Sonnenstrahlung als Hauptwärmequelle verwendet und kommt die tiefste Temperatur des rechtsläufigen Kreisprozesses dem absoluten Nullpunkt tunlich nahe.

(5) In diesen Kreisprozess-Anlagen sind Einrichtungen vorgesehen, dass bevorzugt Sonnenstrahlung und/oder Aussenwärme, ferner - soweit erforderlich - auch andere Wärmequellen zum Aufheizen, Verdampfen und/oder zur Druckerhöhung des Arbeitsmediums Verwendung finden können.

(6) Bei Anlagen für den irdischen Bereich können Wärmeaustauschvorrichtungen vorgesehen sein, mit denen aus den abgekühlten Arbeitsmedien vom Bereich der tiefsten Temperaturstufe des rechtsläufigen Kreisprozesses an bis zur Aussentemperatur ohne Mehraufwand von Energie N u t z k ä l t e gewonnen werden kann. (Anspruch 1)

Durch die - den allgemeinen Lösungsgedanken beherrschende - Tendenz, thermodynamische Kreisprozesse soweit als möglich auf das Temperaturgebiet zwischen absolutem Nullpunkt und Aussentemperatur zu verlegen, ergeben sich für die Gewinnung von Nutzarbeit aus Wärme die folgenden Vorteile:

a) Optimale thermische Wirkungsgrade der Kreisprozesse;

b) die Möglichkeit der bevorzugten Verwendung von Aussenwärme und Wärme aus Sonnenstrahlung;

c) Fortfall von ökologischen Störungen durch Abwärme;

d) Möglichkeit, die gleichen thermodynamischen Anlagen sowohl für stationäre Wärmekraftanlagen und/oder Kälteanlagen als auch für den Antrieb von Fahrzeugen, Schiffen, Flugzeugen und andere Zwecke zu verwenden;

e) Möglichkeit, thermodynamische Anlagen, die für die Verwendung auf Erden bestimmt sind, auch ausserhalb der Erde in der Sphäre der Erdsatelliten, auf dem Monde, den Planeten, im (interplanetaren) Weltraum zu verwenden.

Die vorliegende Stammanmeldung hat den Charakter einer Rahmen-Anmeldung, in welcher viele Teillösungen des Aufgabenkomplexes nur angedeutet werden können. - Diese sollen später in zusätzlichen Anmeldungen ausführlicher behandelt werden.

## C. Gewinnung von Nutzarbeit aus Wärme

Anlagen nach dem allgemeinen Lösungsgedanken unter besonderer Bevorzugung der beiden Wärmequellen Aussenwärme und Sonnenstrahlungswärme werden dem Aufgabenkomplex in idealer Weise gerecht, wenn sie am Meeresstrand in wärmeren Breitengraden angelegt werden können, und wenn gleichzeitig ein Grossteil der durch die Umwandlung der Meerwasserwärme in Nutzarbeit entstehenden Nutzkälte zur Entsalzung sehr erheblicher Mengen von Meerwasser durch Ausfrieren des reinen Wassers ausgenützt und dadurch weite Wüstengebiete fruchtbar gemacht werden können. - Solche Anlagen brauchen im Allgemeinen keinerlei weitere Wärmequellen wie Brennstoff, Kernenergie usw. Vielmehr werden sie sogar imstande sein, unter Ausnützung eigener Speicheranlagen durch ausgedehnte Verteilernetze den Energiebedarf grosser Gebiete und vieler Industrie-Anlagen zu decken. - Hierbei ist noch das folgende zu beachten: Die Anlagekosten für die Gewinnung von Nutzarbeit aus Meerwasserwärme allein dürfte auf die Kilowattstunde umgerechnet erheblich billiger kommen, als die Kosten der zusätzlich aus Sonnenstrahlung gewonnenen Arbeitsenergie, schon deswegen, weil die letztgenannte Wärmequelle nur tagsüber zur Verfügung steht. Daraus folgt, dass bei jenen Kraftwerken, die hauptsächlich der Meerwasser-Entsalzung dienen und in denen gewaltige Mengen von Meerwasser auf $0^{\circ}$ C abgekühlt werden müssen, die Nutzarbeit, die aus der Wärmedifferenz des Meerwassers (Aussentemperatur bis $0^{\circ}$ C) gewonnen wird, gewissermassen - so grotesk das auch klingen mag - als Nebenprodukt der Entsalzung anfällt.

Solche Werke werden in vielen Fällen auch auf Sonnenstrahlungsenergie verzichten können. Die Kreisprozess-Anlagen dieser Werke brauchen nur auf Höchst-Temperaturen eingestellt zu werden, die der Temperatur der Meerwasser-Oberfläche entsprechen. (Anspruch 2).

So weit - so gut. - Wie steht es aber mit jenen hochindustriellen Gebieten, die weit entfernt von Meeresstränden bisher auf die traditionellen Brennstoffe aller Art, einschliesslich Kernenergie, angewiesen sind, weil die Verwendungsmöglichkeit von Aussenwärme aus Gewässern oder Sonnenstrahlung aus geographischen Gründen nur beschränkt ist? - Nun, auch solche Gebiete können aus dem Erfindungsgegenstand erheblichen Nutzen ziehen, weil auch sie in den Genuss des erheblich verbesserten thermischen Wirkungsgrades ihrer Wärmekraftanlagen kommen können, wenn dieselben nach den Lehren dieser Anmeldung einen Prozessverlauf ermöglichen, der grösstenteils unterhalb der Aussentemperaturen verläuft. - Der Erfinder schätzt, dass ganz allgemein für solche Wärmekraftanlagen für alle in dieser Beschreibung angeführten Wärmequellen - auch für die Speicher von Sonnenstrahlungswärme - ja selbst für Kernkraftwerke eine Höchsttemperatur von $70^{\circ}$ - $80^{\circ}$ C ausreicht. (Anspruch 3).

Die grosse Anzahl und Vielfalt der V a r i a n t e n ist schon durch den so ausgedehnten Aufgabenkomplex des Erfindungsgegenstandes begründet, weiterhin durch die Notwendigkeit, sich an so viele wechselnde Voraussetzungen anzupassen, unter Arbeitsmedien für rechts- und linksläufige Prozesse die jeweils bestgeeigneten auszuwählen und die physikalischen Eigenschaften der Medien und ihr Verhalten im Sättigungsgebiet und im Gebiet des Tripelpunktes gebührend zu berücksichtigen. - Das alles führt zu einer Reihe von Einzelproblemen. - Nachstehend wird der Versuch unternommen, die vielen Varianten einigermassen zu ordnen und durch Hinweise auf die zugehörigen Ansprüche das Verständnis zu erleichtern.

In den rechtsläufigen Kreisprozessen erfolgt die Expansion des gespannten Arbeitsmediums in der Regel adiabatisch. Entsprechend den Eigenschaften des Mediums, insbesondere dessen Diagramm, ist jedoch verschiedentlich eine vorhergehende kürzere oder längere annähernd isothermische/Entspannung oder polytropische notwendig oder ratsam. (Anspruch 4).

Grundsätzlich kann auch in rechtsläufigen Prozessen das Arbeitsmedium alle Stufen des Prozesses gasförmig durchlaufen ohne also seinen Aggregatzustand zu verändern. Das führt aber zu aufwendigen und umständlichen Vorrichtungen und zu Nachteilen für die Gesamtanlage. - Als bessere Lösung erscheint die Wiederverflüssigung des Arbeitsmediums in jedem einzelnen Kreislauf. Um dies zu erreichen, ist unter anderen die folgende Variante vorgesehen: Mindestens ein linksläufiger Kreisprozess, der ebenfalls ständig umläuft, beschafft die zur vollen Verflüssigung des Mediums im rechtsläufigen Prozess erforderliche Kältemenge. (Anspr. 5).

Eine solche rechtsläufige Kreisprozessanlage könnte dann den folgenden Verlauf ausweisen:

1) Das Arbeitsmedium des rechtsläufigen Kreisprozesses befindet sich in der kältesten Prozesstufe im flüssigen Aggregatzustand.

2) Dieses flüssige Medium wird laufend in den Kessel gedrückt, dort durch Wärmetausch mit den Wärmequellen laufend aufgeheizt, verdampft und ggf. überhitzt.

3) Das gespannte Medium wird bei seiner maximalen Temperatur im Kessel oder einem besonderen Behälter gesammelt.

4) Sodann wird das gespannte Medium in Expansionsmaschinen unter Leistung von Nutzarbeit entspannt.

5) Durch Steuerung der Entspannung und - soweit erforderlich durch zusätzlichen Entzug von Wärme wird das Arbeitsmedium wieder auf seine tiefe Ausgangstemperatur beim zugehörigen Druck und beim Ausgangs-Aggregatzustand zurückgeführt.

6) Das Spiel wiederholt sich. (Anspruch 6).

Der Zusätzliche Entzug von Wärme aus dem Arbeitsmedium des rechtsläufigen Kreisprozesses während oder nach dem Expansionsvorgang kann auch dadurch erfolgen, dass in einer Expansionsstufe oder anschliessend an diese die hohle Metallwand der Expansionsmaschine oder der Ableitung aus dieser Maschine von noch kälteren Medien durchströmt wird. (Anspruch 7).

Für Arbeitsmedien, deren Wiederverflüssigung sich als besonders schwierig erweist, wird noch das folgende Verfahren vorgeschlagen: Im Kreisprozess solcher Anlagen wird nach der letzten Expansionsstufe laufend der noch nicht verflüssigte Teil des Arbeitsmediums noch einmal in die letzte Entspannungsstufe unter dem dort herrschenden Anfangsdruck jedoch bei beträchtlich kälterer Temperatur zurückgeführt und zusammen mit dem frischen gasförmigen Arbeitsmedium daselbst noch einmal entspannt und auf diese Weise schliesslich vollständig verflüssigt. (Anspruch 8).

Eine weitere Variante zur Sicherstellung der vollständigen Verflüssigung des Arbeitsmediums eines rechtsläufigen Kreisprozesses ist die folgende: In linksläufigen Kreisprozessen laufend abgekühlte Gase werden im Gegenstrom zum Arbeitsmedium des rechtsläufigen Prozesses folgendermassen geleitet: Vom Gebiet des Tripelpunktes ausgehend wirken sie zuerst mit dem stärksten Temperaturunterschied auf das auf die Tripelpunkts-Temperatur vorgekühlte und der völligen Verflüssigung bereits angenäherte Arbeitsmedium des rechtsläufigen Prozesses. In weiterer Folge durchläuft das Medium des linksläufigen Prozesses dann die hohlen Metallwände der Expansionsmaschinen, wodurch eine Abkühlung des expandierenden Arbeitsmediums über die Wirkung der adiabatischen Entspannung hinaus erreicht wird. (Anspruch 9).

In der Regel werden die Arbeitsmedien der linksläufigen Kreisprozesse Tripelpunkts-Temperaturen aufweisen, die unterhalb der Tripelpunkts-Temperaturen der zugehörigen rechtsläufigen Prozesse liegen. - Der Verlauf der Entspannungen wird so gesteuert, dass auch in den Fällen, in denen die Gase des rechtsläufigen Prozesses verflüssigt werden, das Arbeitsmedium des linksläufigen Prozesses gasförmig bleibt. (Ansprüche 10 und 11).

Ein zügiges Ablaufen der einzelnen Kreisprozesse und aller ihrer Stufen entsprechend dem Tempo der adiabatischen Entspannungsstufen kann dadurch erreicht werden, dass insbesondere bei den für den Wärmetausch vorgesehenen Stufen sowohl bei der Aufheizung und Verdampfung als auch bei der zusätzlichen Abkühlung und Kondensation der Medien mit bekannten Mitteln (Parallelschaltung mehrer Teilprozesse, Querschnittvergrösserungen, Einfügung von Sammelbehältern u.a.) Stockungen im Gesamtablauf insbesondere bei Belastungs- und Leistungsänderungen vermieden werden. (Anspruch 12).

### D. Wärmerohre mit Kapillar-Strukturen

Um die mannigfachen thermodynamischen Kreisprozesse, die für die erfindungsgemässe Umwandlung von Wärme in Nutzarbeit in Frage kommen, ständig aufrechtzuerhalten, ergibt sich immer wieder die Notwendigkeit, in einzelnen Prozessstufen oder zwischen zwei Prozesstufen Wärmetausch-Vorrichtungen zu verwenden. Lediglich bei rein adiabatischen Spannungsänderungen des Arbeitsmediums entfällt die Zu- oder Abfuhr von Wärme. - Im krassen Gegensatz zu den adiabatischen Vorgängen stehen insbesondere jene Fälle, bei denen nach dem Programm des Kreisprozesses annähernd isothermische Spannungsänderungen erforderlich wären. In diesen Fällen geht es meist darum, dass der erforderliche Wärmeaustausch mit traditionellen Mitteln sich zu langsam auswirkt, wodurch die ungehemmte Durchführung aller Prozesstufen für die gegebene gleiche Durchgangsleistung aller Stufen erschwert wird.

Im Hinblick auf diesen Engpass der langsamen Wirkung der traditionellen Wärmeaustauschvorrichtungen kommt eine neue Art von Wärmetauschern, bekannt unter dem Namen "Wärmerohr" (Heat Pipe) wie gerufen. Denn nach Angaben mehrer seriöser Fach-Handbücher haben solche "Wärmerohre" eine "scheinbare Wärmeleitfähigkeit", die "um 4 Zehnerpotenzen grösser ist als die guter metallischer Wärmeleiter". - Solche Wärmerohre sind geschlossene Rohrstücke, die eine bestimmte Menge eines Arbeitsfluids enthalten, das bei der gegebenen Temperatur zwischen flüssigem und gasförmigem Aggregatzustand wechselt und im Zusammenspiel mit einem im Rohr befindlichen Körper oder Geflecht von Kapillarstruktur einen raschen Wärmetransport durch das Wärmerohr ermöglicht. - - Wärmerohre waren ursprünglich aus feuerfesten keramischen Stoffen vorgesehen mit Kapillarstrukturen z.B. aus Stahl oder Stahlgeflechten. - Für Anlagen entsprechend dem Anmeldungsgegenstand werden geschlossene Rohrteile aus geeigneten Stoffen, auch Kunststoffen mit wärmedämmenden Einlagen oder hohlen Wänden nach

0001382

Art der Thermosflaschen empfohlen und für die Kapillarstrukturen auch dochtförmige Geflechte nach Art der Dochte
für Petroleumlampen.

Auf Sonderkonstruktionen der Wärmerohre und deren
Kapillarstrukturen soll in zusätzlichen Anmeldungen eingegangen werden. (Ansprüche 13 und 14).

### E. Kombinationen mit Wärmepumpen-Anlagen

Der Abschnitt C und der noch folgende Abschnitt G dieser
Schrift sind vornehmlich der Gewinnung von Nutzarbeit aus
Wärme in verschiedenen erfindungsgemässen Anlagen gewidmet. -
Wenn jedoch die Aufgabe gestellt ist, ein Maximum an
N u t z w ä r m e z.B. für Heizzwecke zu gewinnen, so könnte
hier darauf verwiesen werden, dass durch die sehr erhebliche
Verbilligung der elektrischen Energie durch diese Erfindung
damit auch die Frage der elektrischen Heizung aus dem elektrischen Energienetz gelöst ist. - Dass auch nach einer
weltweiten Verbilligung der elektrischen Energie in vielen
Fällen noch eine zusätzliche Rationalisierung der Nutzwärme
für Heizzwecke möglich ist, das zeigt der nunmehr folgende
Vorschlag, die Nutzarbeitsgewinnung nach dem Anmeldegegenstand mit dem bekannten Prinzip der W ä r m e p u m p e
zu kombinieren. - Eine solche Kombination kann für Heizzwecke dadurch erfolgen, dass z.B. in Zeiten geringer Belastung des Netzes Wärmepumpen-Anlagen zur Aufheizung
grösserer Speicher-Heizkessel verwendet werden, die dann
über den ganzen Tag verteilt Heizwärme abgeben. - - Eine
weitere Möglichkeit besteht darin, dass die durch die
Wärmepumpe in der Temperatur heraufgesetzte Nutzwärme dazu
verwendet wird, in Kraftwerksanlagen für Kreisprozesse mit
höchster Temperaturstufe von etwa $75^{\circ}$ C gemäss Anspruch 3
die Heizkessel auf diese Höchsttemperatur laufend aufzuheizen.

Die Liste solcher Kombinationsmöglichkeiten soll in
zusätzlichen Anmeldungen erweitert werden. (Ansprüche 15
bis 17).

- 12 -                    0001382

## F. Speicherung von Energie

Zum Aufgabenkomplex gehört die Forderung, dass das Speichern von Sonnen- und Aussenwärme-Energie für Zeiten verringerten Bedarfes an Nutzarbeit in den Anlagen vorgesehen sein soll, um dann bei Belastungsspitzen oder in Perioden stärkerer Belastung zur Verfügung zu stehen. Dies kann auf mannigfache Weise verwirklicht werden:

In allen Fällen wird zuerst die in der Anlage verfügbare aber nicht sofort benötigte Menge an Sonnenstrahlungswärme und/oder Aussenwärme in den Expansionsmaschinen der Anlage in Arbeit umgesetzt. - In manchen Fällen ist die Umsetzung in elektrische Energie gar nicht erforderlich. So kann beispielsweise in Kompressoren Druckluft erzeugt und diese in Windkesseln bis 200 at gespeichert werden. - Ähnlich können bei Verbindung mit Wasserkraftanlagen durch Pumpen Wassermengen in hochgelegene Staubecken gepumpt werden, um im Bedarfsfalle als Reserve zu dienen. - Die Regel für die Speicherung wird wohl bleiben, dass die nicht sofort benötigte Energie der Anlage in elektrische Energie umgewandelt wird, die dann unter Ausnützung des gesamten Leitungsnetzes und Verbundnetzes an jene Kraftwerke oder Verteilungswerke geleitet werden, die auf Speicherung von Elektro-Energie eingerichtet sind. Das sind vor allem die altbekannten elektrischen Akkumulatoren-Anlagen. Dazu kommen noch Anlagen für elektrochemische und elektro-metallurgische Prozesse. - Neu ist vielleicht der Vorschlag, im gesamten Verbundgebiet verteilt Elektrolyse-Anlagen vorzusehen, vornehmlich solche für die Elektrolyse von Wasser, wobei grössere Gasometer-ähnliche Behälter die Speicherung des erzeugten Wasserstoffes und Sauerstoffes übernehmen. - Da bei solchen Anlagen hohe Anforderungen an die Sicherheit gegen Explosionen zu berücksichtigen sind, wird noch vorgeschlagen, die beiden zur Speicherung dienenden Gase unter Verwendung der reichlich verfügbaren Nutzkälte zu verflüssigen und in diesem Aggregatzustand bei Atmosphärendruck von neutralen Schutzgasen umhüllt zu lagern. - Solche Wasserstoff- und Sauerstoff-Speicher im Verbundnetz verteilt können auch als Tankstellen von Treibstoffen für Wasserstoff-Kraftfahrzeuge dienen. -

Für diesen Zweck können auch die beiden Gase unmittelbar nach der Elektrolyse ohne besondere Kompressionsvorrichtungen in Stahlflaschen bei etwa 30 at Druck abgefüllt und so in den Tankstellen bereitgestellt werden. -- Weitere Speicher-Möglichkeiten sollen in zusätzlichen Anmeldungen angeführt werden. (Anspruch 18).

### G. Arbeitsmedien

Als A r b e i t s m e d i e n für erfindungsgemässe Kreisprozesse kommen Gase oder Gasgemische in Frage, deren Siedepunkte bei Atmosphärendruck unterhalb von etwa $0^\circ$ C liegen, wie Helium, Wasserstoff, Stickstoff, Argon, Methan, Kohlendioxyd, Ammoniak, ferner Kohlenwasserstoffe aller Art, Stickoxydul und viele andere Gase, deren Vorzüge für den vorliegenden Verwendungszweck noch gar nicht bekannt sein dürften. - Helium, dessen Sättigungsgebiet nur wenige Grade über dem absoluten Nullpunkt liegt, ist schon aus diesem Grunde als Arbeitsmedium für linksläufige Prozesse gut geeignet. Dessen ungeachtet kann Helium aber auch gleichzeitig als Arbeitsmedium für rechtsläufige Prozesse verwendet werden. - Neben Helium kommen für linksläufige Prozesse auch jene Arbeitsmedien in Betracht, deren Tripelpunkt tiefer liegt als der des Arbeitsgases für den zugehörigen rechtsläufigen Prozess. Wasserstoff als Arbeitsmedium hat neben dem Vorteil des weitgehenden Wirkungsbereiches ab ca. $20^\circ$ K und der guten Wärmeleitfähigkeit leider auch den Nachteil der hohen Explosionsgefahr, die sorgfältige Sicherheitsvorkehrungen erforderlich macht. - Luft und andere Gasgemische bieten den Vorteil, dass bei entsprechender Steuerung der Prozesse mehrere Kondensationspunkte durchlaufen werden können, so dass die Verflüssigung und die damit verbundene Abführung der Kondensationswärme in Etappen erfolgen kann.

Für eine Reihe von Fällen empfiehlt es sich, anstatt eines einzigen Arbeitsmediums für den rechtsläufigen Kreisprozess deren mehrere für verschiedene Temperaturstufen zu verwenden, die sich derart ergänzen, dass vom tiefsten Temperaturgebiet angefangen bis zum höchsten die Kreisprozesse mit abgestuften Temperaturgebieten sich zu einem

0001382

lückenlosen Gesamt-Temperaturgebiet mit entsprechend hohem thermischen Wirkungsgrad zusammenschliessen. — Für den erforderlichen Wärmeübergang zwischen benachbarten Kreisprozessen für abgestufte Temperaturgebiete sind Wärmerohre (Heat Pipes) mit Kapillarstrukturen ganz besonders geeignet. (Anspruch 19).

### H. Nutzkälte und Meerwasserentsalzung

Wie früher bereits erwähnt, werden bei Gewinnung von Nutzarbeit aus der Aussenwärme mittels der erfindungsgemässen Verfahren auch erhebliche Mengen von Kälte freigelegt, die als Nutzkälte für die verschiedensten Zwecke Verwendung finden können. Die Nutzung dieser Kältemengen erfolgt in bekannter Weise durch Wärmeaustausch. —

Ein Beispiel für die Verwendung der anfallenden Nutzkälte ist die Entsalzung von Meerwasser nach besonderen Gefrierverfahren. — Die bisher bekannten Verfahren für die Meerwasser-Entsalzung, sowohl Destillations- als auch Gefrierverfahren, haben in grösserem Umfang noch nicht in die Praxis umgesetzt werden können, offenbar wegen Unwirtschaftlichkeit. — Wenn jedoch nun im Zusammenhang mit der Gewinnung von Nutzarbeit nach den erfindungsgemässen Verfahren am Meeresstrand in den Tropen, den subtropischen und gemässigten Zonen das ganze Jahr hindurch 24 Stunden täglich grosse Kältemengen zur Verfügung stehen, dann sind auch die Voraussetzungen für die Meerwasser-Entsalzung in grossem Ausmass unter wirtschaftlichen Bedingungen gegeben, so dass die Fruchtbarmachung von bisher brachliegenden Wüstengebieten ernsthaft in Erwägung gezogen werden kann, ein Ziel, das auch zu den heutigen Weltproblemen gehört.

Der erfindungsgemässe Grundgedanke für die Meerwasserentsalzung besteht darin, dass die bei Gewinnung von Nutzarbeit aus Aussenwärme anfallende Nutzkälte dazu verwendet wird, nach dem Vorbild der Entstehung der salzfreien Eisberge aus Meerwasser mittels dieser Nutzkälte in allen Zonen der Erde reines Eis aus dem Meerwasser a u s z u - f r i e r e n , wobei das Meerwasser ähnlichen Bedingungen ausgesetzt wird, wie sie bei Entstehung der Eisberge in der Polarzone gegeben sind. (Anspruch 20).

Von den Möglichkeiten der Verwirklichung dieses Grundgedankens wird nachstehend als Beispiel ein Verfahren beschrieben, das sich aus den angeführten Stufen zusammensetzt:

(1) Das Meerwasser von Aussentemperatur wird vorwiegend durch Nutzkälte, die bei der Gewinnung von Nutzarbeit aus Aussenwärme anfällt, auf etwa $0^0$ C abgekühlt;

(2) diesem Meerwasser von $0^0$ C werden in einer Ausfrieranlage durch Nutzkälte jene Wärmemengen entzogen, die der Schmelzwärme reinen Wassers in der Ausfrieranlage entsprechen, wobei durch Regelung von Menge und Temperatur des Kühlmediums ferner durch Bewegung und gutes Durchmischen in dem Meerwasser-Eisgemisch ständig und durchwegs die Temperatur von $0^0$ C aufrechterhalten wird;

(3) nach Erreichen des nach Erfahrungssätzen vorgesehenen Grades der Salzanreicherung des Meerwassers wird dieses durch eine Siebeinrichtung abgeleitet;

(4) schliesslich wird das abgesonderte reine Eis zum Beispiel durch Süsswasser aufgetaut und als Nutzwasser abgeleitet. (Anspruch 21).

## J. Ausführungsbeispiele für thermische Prozesse

Eine Überprüfung der für thermodynamische Kreisprozesse im tieferen Temperaturgebiet in Frage kommenden Gase ergibt, dass die folgenden Gase besonders geeignet erscheinen: Helium, Wasserstoff, Neon und Stickstoff.

Neben den vier angeführten Gasmedien sind noch eine Reihe von Stoffen zu erwähnen, die als Arbeitsmedien für Wärme-Rohre (heat-pipes) mit Kapillarstruktur dienen können: Sauerstoff, Kohlenmonoxyd, Fluor, Argon, Methan (und andere Kohlenwasserstoffe), Stickoxydul, Krypton, Xenon, Chlor, Kohlendioxyd, Ammoniak.

H e l i u m  als Arbeitsmedium hat den Vorzug, bis auf ganz wenige Grade über dem absoluten Nullpunkt den gasförmigen Zustand zu behalten. Das Temperatur-Entropie-Diagramm von Helium weist von etwa $35^0$K ab für die Isenthalpen eine besondere Regelmäßigkeit auf. Ein weiterer Vorzug von Helium für den vorliegenden Verwendungszweck ist seine Eigenschaft, mit nur wenigen anderen Stoffen chemische Verbindungen einzugehen und nicht explosiv zu sein. Erwähnt soll auch noch werden, dass Helium unterhalb des Sättigungsgebietes (Nassdampfgebietes) nur bei abnormalen Drucken in den festen Aggregatzustand überführt werden kann.

Fig. 1 zeigt das Ausführungsbeispiel eines rechtsläufigen Kreisprozesses mit Helium als Arbeitsmedium in einem Temperatur-Entropie-Diagramm, welches einen l o g a r i t h m i s c h e n Temperaturmasstab aufweist.

Fig. 2 zeigt im gleichen Diagramm wie Fig. 1 einen vom rechtsläufigen Hauptkreisprozess unabhängigen linksläufigen Kühl-Kreisprozess zur Beschaffung der für den Hauptprozess erforderlichen Nutzkälte.

Fig. 3 und Fig. 4 zeigen das Ausführungsbeispiel für Helium gemäss den Fig. 1 und 2 noch einmal mit dem Unterschied, dass beide Diagramme nunmehr einen l i n e a r e n Temperatur-Masstab aufweisen.

Fig. 5 und 6 zeigen die Anlagen und Einrichtungen gemäss den Fig. 1, 2, 3, 4 und deren Zusammenhänge, die in der Beschreibung erläutert werden.

Fig. 7 zeigt eine Variante der Fig. 3 und 4.

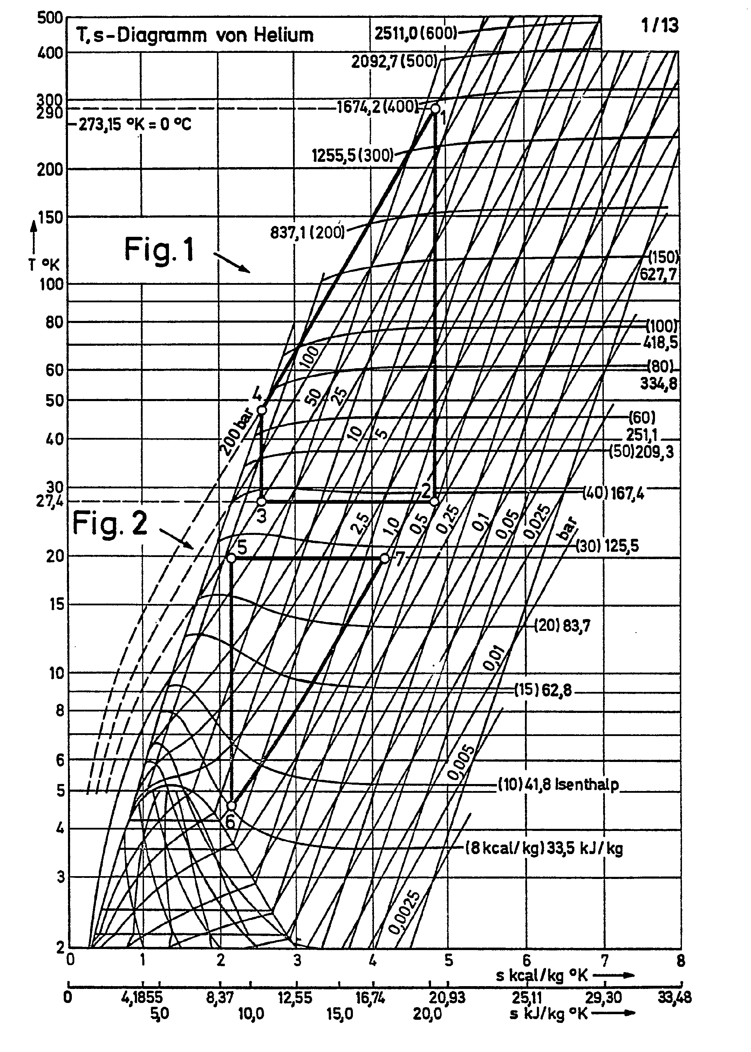

Durch die Besonderheit des logarithmischen Temperatur-Masstabes bei den Fig. 1 und 2 wird erreicht, dass erstens das ganze für erfindungsgemässe Prozesse in Betracht kommende Temperaturgebiet ($2^o$ bis $500^oK$) in gedrängter Form dargestellt werden kann, und dass zweitens die kältesten Stufen besonders deutlich zu sehen sind. - In diesem Diagramm verlaufen die Linien der Isenthalpen zwischen $30^oK$ und $500^oK$ nahezu waagerecht, zum Unterschied zu den Isenthalpen-Linien der Diagramme von beispielsweise Neon und Stickstoff. Daraus folgt, dass in dem Gebiet, in welchem die erfindungsgemässen Kreisprozesse verlaufen, i s o - t h e r m i s c h e Kompressionen ohne besonderen Energie-Aufwand und ohne Zu- oder Abführung besonderer Wärmemengen durchführbar sind. - Wenn man in diesem Zusammenhang noch berücksichtigt, dass durch Verwendung von W ä r m e - R o h r e n (heat-pipes) mit kapillarer Struktur der für isothermische Kompression so wichtige rasche Wärmeausgleich sehr begünstigt werden kann, so kommt man zu dem Ergebnis, dass durch die vorherrschend waagerechte Lage der Isothalpen im Helium-Diagramm dieses Gas als Medium für erfindungsgemässe Anlagen besonders gut geeignet ist.

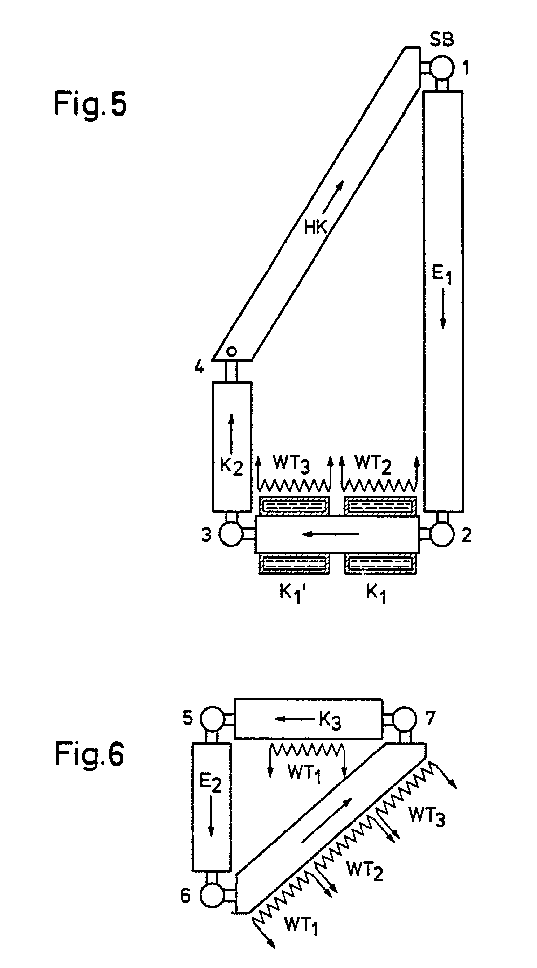

Gemäss Fig. 1, 3 und 5 ist im ausgewählten Ausführungsbeispiel der Verlauf des Kreisprozesses 1-2-3-4-1 der folgende: Vor der Inbetriebsetzung wird nach bekannten Verfahren Heliumgas im Sammelbehälter SB (Punkt 1 des Diagramms) auf ca. 200 at komprimiert, jedoch gleichzeitig so gekühlt, dass im Kessel SB (Punkt 1) die angenommene Außentemperatur von $290^\circ K$ (entsprechend beispielsweise der Temperatur des als Wärmequelle verwendeten Meerwassers) herrscht. - Vom Kessel SB bei Punkt 1 aus wird laufend mindestens eine Expansionsmaschine $E_1$ angetrieben, welche gegen Wärmeabgabe von und nach aussen gut geschützt ist, damit die Umsetzung von Wärme in mechanische Nutzarbeit nahezu adiabatisch erfolgen und die gewonnene mechanische Arbeit dem Aequivalent der dem Gasmedium entzogenen Wärmeenergie entsprechen muß. Der adiabatische Entspannungsprozess endet mit Punkt 2 des Diagramms, wo das entspannte Gasmedium von ungefähr $27,4^\circ K$ und ca. 0,6 at Druck im Zwischenbehälter gesammelt wird, um dann auf der Temperaturlinie $27,4^\circ K$ durch die Kompressoren $K_1$ und $K_1'$ i s o t h e r m i s c h bis auf ca. 50 at komprimiert und bei Punkt 3 des Diagramms im neuen Behälter gesammelt zu werden. - Die gewählte Temperaturstufe von $27,4^\circ K$ als Leitlinie für die isothermische Kompression entspricht dem Siedepunkt von Neon bei 1 at. - Die metallischen Kompressoren $K_1$ und $K_1'$ sind in geschlossenen Behältern mit flüssigem Neon von 1 at Druck untergebracht. Parallel zur Achse der Kompressoren verlaufen im flüssigen Neon Kapillarstrukturen, vorzugsweise Dochte. Kompressorgehäuse, siedendes Neon und Dochte als Kapillarstruktur bilden somit eine Wärme-Rohr (heat-pipe) -Einheit in Großausführung. Abgesehen von diesen beiden Wärme-Rohr-Einheiten in Großausführung ($K_1$ und $K_1'$) können weitere Wärme-Rohre (heat-pipes) unmittelbar an oder in den Wänden der Kompressoren oder der Behälter befestigt sein. (Diese zusätzlichen Wärme-Rohre sind in der Zeichnung nicht gezeigt, lediglich die Wärmetauscher $WT_1$, $WT_2$ und $WT_3$ zeigen die Zusammenhänge in den Fig. 5 und 6.)

Die beiden Medien Helium und Neon kommen nicht miteinander in Berührung. Der zugeschaltete Neon-Prozess dient hauptsächlich der Erhaltung der Stabilität bzw. Konstanz der Temperatur zwischen den Punkten 2 und 3 des Hauptprozesses.

Vom Behälter bei Punkt 3 des Kreisprozesses wird das Arbeitsmedium in einem gegen Wärme-Aufnahme oder -Abgabe geschützten Kompressor $K_2$ adiabatisch auf 200 at komprimiert. Wie aus dem Diagramm ersichtlich, entspricht dieser neue Punkt 4 des Prozesses, in welchem die maximale Spannung des Mediums erreicht wird, einer Temperatur von etwa $45^oK$. Bei Punkt 4 ist kein besonderer Behälter für das gespannte Arbeitsmedium erforderlich. Vielmehr beginnt bei Punkt 4 der Heizkessel HK, in welchen der Kompressor $K_2$ das Arbeitsmedium drückt. Dieser Heizkessel HK besteht in der Hauptsache aus einer metallischen Rohrleitung von flachem Querschnitt (etwa wie bei Heizkörpern). In diesem Heizkessel wird das gepresste Heliumgas von ca. 200 at auf der ganzen Länge von Punkt 4 bis zum Sammelkessel bei Punkt 1 auf die Ausgangstemperatur von $290^oK$ durch die aus dem Meerwasser stammende Aussenwärme erhitzt. - Dieses Erhitzen erfolgt im Bereich der kälteren Temperaturen von $45^oK$ bis etwa $240^oK$ im Gegenstrom zum Arbeitsmedium Helium durch Heliumgas von Aussentemperatur als Heizgas. Als Temperatur-Intervall zwischen dem Heizgas Helium und der metallischen Leitungswand des Arbeitsmediums Helium im Heizkessel werden etwa $50^o$ als angemessen erachtet: Das Heizgas von $290^oK$ Temperatur beginnt seine Heizwirkung gegenüber dem auf bereits $240^o$ aufgeheizten Arbeitsmedium Helium, um dann am kältesten unteren Ende des Heizkessels beim Diagramm-Punkt 4 den Heizkessel zu verlassen. Durch Aussenwärme wird das Heizgas wieder auf $290^oK$ erwärmt. - Die Erwärmung des Arbeitsmediums Helium im obersten Teil des Heizkessels erfolgt beispielsweise durch flüssigen Alkohol, der im besonderen Kreislauf immer wieder vom Meerwasser aufgeheizt wird. (Diese beiden Kreisläufe für Heizgas und Heizflüssigkeit sind in den Zeichnungen nicht dargestellt.) (Ansprüche 22 und 23)

In Fig. 2 ist im gleichen Diagramm wie in Fig. 1 mit den Diagramm-Punkten 5-6-7-5 ein linksläufiger Kreisprozeß dargestellt, der vom Hauptprozeß 1-2-3-4-1 unabhängig ist und dessen Arbeitsmedium ebenfalls Helium ist. - Dieser Kälte-Prozeß dient der Beschaffung jener Kältemengen, die für die Durchführung des rechtsläufigen Prozesses gemäß Fig. 1 wie auch der isothermischen Kompression der Stufe 7 bis 5 des linksläufigen Kreisprozesses notwendig sind. - Der Kreisprozeß 5-6-7-5 beginnt mit einem Sammelbehälter in Punkt 5, welcher vor Inbetriebsetzung der Anlage mit Heliumgas von ca. $20^{\circ}K$ und ca. 50 at Spannung gefüllt wird. Während des Betriebes der Gesamtanlage wird durch dieses Heliumgas von 50 at eine Expansionsmaschine $E_2$ adiabatisch betrieben und die der gewonnenen mechanischen Arbeit äquivalente Menge Wärmeenergie dem Heliumgas entzogen, dessen Temperatur beim Diagramm-Punkt 6 auf $4^{\circ}K$ bei 1 at Druck sinkt. Vom Sammelbehälter bei Punkt 6 aus wird bis Punkt 7 das kalte Heliumgas z.B. durch einen Ventilator durch die Wärmetauscher $WT_1$, $WT_2$ und $WT_3$ getrieben. Mittels dieser Wärmetauscher werden laufend die bei den isothermischen Kompressionen entstehenden Wärmemengen der Kompressoren kompensiert. Weil alle Schwankungen dieses Kompensationsvorganges nicht vorausgesehen werden können, ergibt sich die Notwendigkeit, die Kälteleistungen des linksläufigen Prozesses 5-6-7-5 automatisch entsprechend zu regeln. Derartige Regelungseinrichtungen beispielsweise Thermostaten sind bekannt. (In den Figuren sind sie nicht besonders dargestellt.) Die Zusammenhänge der Wärmetauscher $WT_1$, $WT_2$ und $WT_3$ sind in den Fig. 5 und 6 verdeutlicht.

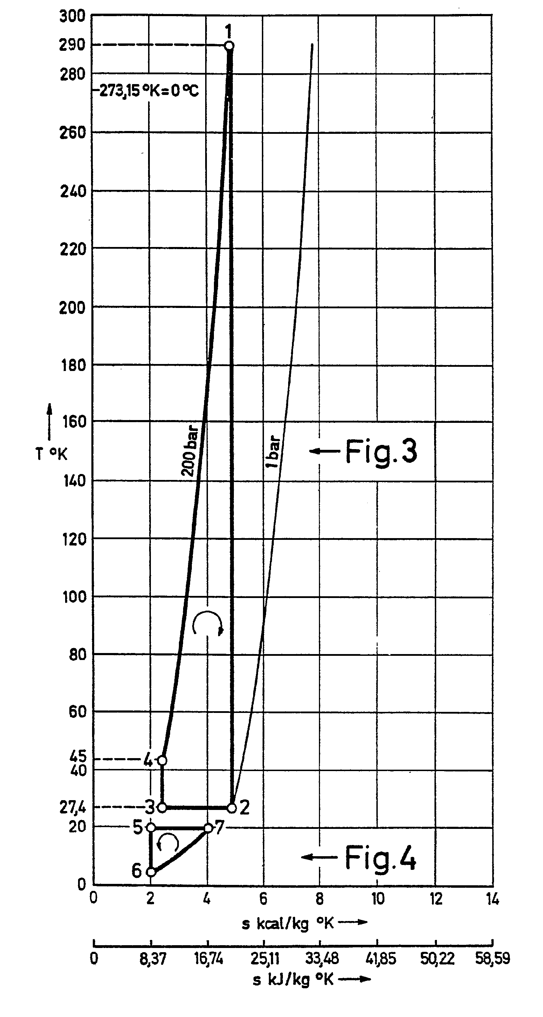

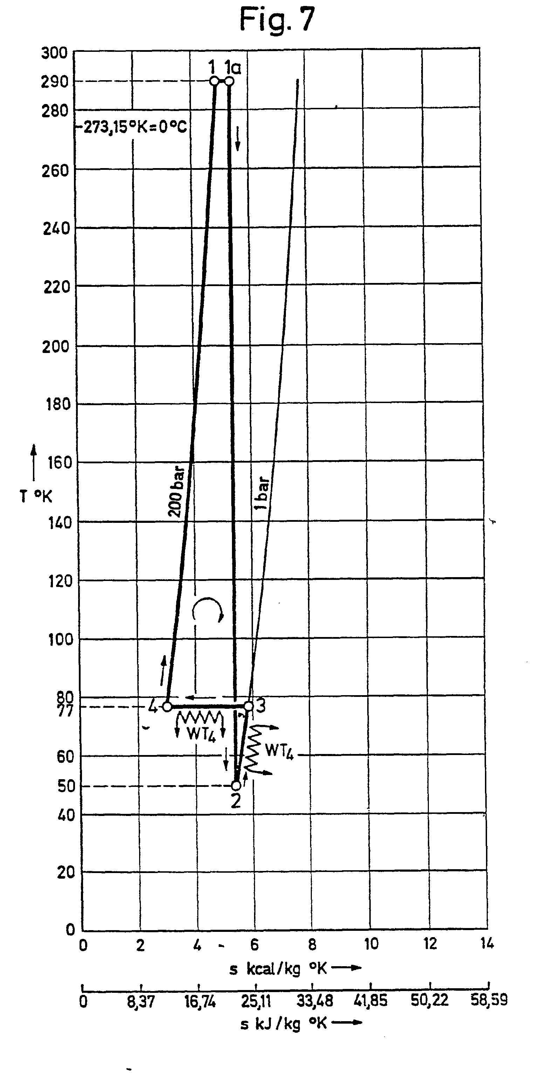

Fig. 7 stellt eine Variante von Fig. 3 und 4 dar, in welcher rechtsläufiger und linksläufiger Kreisprozeß zu einem Linienzug vereinigt sind. - Die Temperaturstufe von ca. $77^{\circ}K$ entspricht dem Siedepunkt für Stickstoff bei 1 at. Die im linksläufigen Teilkreisprozeß zwischen den Punkten 2 und 3 verfügbare Kälte wird durch Wärmetauscher $WT_4$ auf die Kompressionslinie 3 - 4 übertragen, welche mit der Isenthalpie-Linie 100 des Mediums Helium etwa zusammenfällt. Der Wärmetauscher $WT_4$ kann auch zu einem Wärme-Rohr mit Kapillar-Struktur umgestaltet werden. (Vgl. Fig. 5 und 6)

- 20 - 0001382

Aus Fig. 7 ist noch ersichtlich, daß im Bedarfsfalle mit Vorteil vor der adiabatischen Expansionsmaschine eine meist kleinere Stufe für eine isothermische Entspannung (Punkt 1 bis $1_a$) eingeschaltet werden kann.

Die Ausführungsbeispiele der Kreisprozesse aller Arbeitsmedien lassen sich in zwei große Gruppen einteilen:

a) solche m i t Verflüssigung des Arbeitsmediums in der tiefsten Temperaturstufe und

b) solche o h n e Verflüssigung.

Die erstgenannte Gruppe a) ist in der Hauptanmeldung in die Ansprüche 6 bis einschl. 9 eingereiht und beschrieben. - Zur Gruppe b) gehört das in den Fig. 1, 3 und 5 dargestellte Ausführungsbeispiel mit Helium als Medium. - Viele Arbeitsmedien können sowohl in Prozessen der Gruppe a) als auch solchen der Gruppe b) Verwendung finden. - Das gilt auch für Helium. Dieses Medium ist aus den bereits angegebenen Gründen (siehe auch Fig. 1) für die Gruppe a) besonders gut geeignet.

Die im vorliegenden Beispiel angenommenen Temperaturen für den rechtsläufigen Helium-Kreisprozeß können etwa für die gemäßigten Zonen in Betracht kommen. Für tropische Zonen und polare Gebiete, für welche beide erfindungsgemäße Anlagen auch verwendet werden können, müssen hinsichtlich der Außentemperatur entsprechende Änderungen Platz greifen. Es darf noch darauf hingewiesen werden, daß selbst unter vereisten Gewässern eine erfindungsgemäße Verwendung der Außenwärme möglich ist, und zwar sowohl die Wärme der Atmosphäre durch als auch durch die Wärme der nicht gefrorenen Gewässer, soweit diese in ausreichenden Mengen verfügbar sind.

Nur kurz soll anschließend auf die Möglichkeit der Verwendung von G a s g e m i s c h e n im Zusammenhang mit dem Erfindungsgedanken eingegangen werden.

Wenn man H e l i u m g a s in erfindungsgemäßen Anlagen als Arbeitsmedium für den rechtsläufigen Prozeß einsetzt und dabei dem Heliumgas andere Gase vom gleichen Druck beimischt, so muß sich bei der Entspannung und Abkühlung des Gasgemisches folgendes ergeben:

Sobald das Gasgemisch das Temperaturgebiet zwischen kritischer Temperatur und Tripelpunkt eines beigemischten Stoffes durchläuft, muß jeder einzelne beigemischte Stoff nacheinander in den flüssigen und dann in den festen Aggregatzustand oder in ein Gemisch beider Zustände übergehen. Dadurch wird die Möglichkeit geschaffen, in einer noch etwas tieferen Temperaturstufe die beigemischten Stoffe auszuscheiden. Heliumgas durchläuft dann die verbliebenen Entspannungsstufen schließlich ohne jede Beimischung. - Auf diese Weise können aus Gemischen gewonnen werden: Edelgase (wie Neon, Argon, Krypton u.a.) Kohlenwasserstoffe, Alkohole, Sauerstoff, Stickstoff, Fluor und viele andere.

W a s s e r s t o f f  kann unterhalb von $20^{\circ}$K aus dem Gemisch mit Helium in fester Form ausgeschieden werden, um etwa als idealer Treibstoff für Kraftwagen in Stahlflaschen aufbewahrt zu werden.

Auch die Gewinnung von  T r o c k e n e i s  aus $CO_2$ kann mit einer erfindungsgemäßen Anlage kombiniert werden, wenn man $CO_2$-Gas z.B. dem gespannten Heliumgas beimischt und einige Grade unterhalb der Sublimationstemperatur von $CO_2$ (d.i. $194.6^{\circ}$ K) das Trockeneis abscheidet. - Statt Heliumgas kann bei $CO_2$ auch Luft u.a. in Frage kommen.

Während bisher in der Hauptanmeldung und in dieser Zusatzanmeldung im allgemeinen nur  g e s c h l o s s e n e  Kreisprozesse behandelt wurden, soll anschließend in Verbindung mit Gasgemischen noch auf die Möglichkeit hingewiesen werden, auch  o f f e n e  Kreisprozesse zu verwenden: Die bei  G a s g e m i s c h e n  mit vorzugsweise Heliumgas als wichtigstem Bestandteil dem hochgespannten Gas bei maximaler Prozeßtemperatur beigemischten Stoffe können in den einzelnen Stufen als feste oder flüssigfeste Stoffe aus dem Hauptprozeß ausgeschieden werden und beispielsweise gemischt in einem entsprechenden Heizkessel wieder aufgeheizt und auf Außentemperatur bei maximalem Betriebsdruck gebracht werden, während das Heliumgas schließlich bei beispielsweise $5^{\circ}$K und 2 at Druck seine tiefste Temperaturstufe erreicht, um dann im rechtsläufigen Kreisprozeß wieder aufgeheizt und gespannt zu werden.

Durch einen solchen teilweise o f f e n e n Kreisprozeß von Mischgas kann beispielsweise W a s s e r s t o f f mit seinen gegenüber Helium vorteilhaften physikalischen Daten (Enthalpie und Entropie) in erfindungsgemäßen Anlagen ohne besondere grundsätzliche Schwierigkeiten als Arbeitsmedium eine neuartige Verwendung finden. (Ansprüche 28 und 29)

## K. Weitere Ausführungsbeispiele

Es wurde bereits durch den Anspruch 19 ein besonderes Schema für einen Kreisprozeß-Komplex offenbart, dessen Hauptkennzeichen sind, daß solche Komplexe aus mehreren Teilanlagen für einzelne Temperaturgebiete bestehen, die sich zu einem lückenlosen Gesamt-Temperaturgebiet zusammenschließen. - Zwischenzeitliche Überprüfungen der Eigenschaften mehrerer einschlägiger Arbeitsmedien haben die Vermutung bestärkt, daß auch bei Komplexen gemäß Anspr. 19 neben der Verwendung verschiedener Arbeitsmedien in den einzelnen Teilanlagen bestimmte bevorzugte Arbeitsmedien für mehrere oder für alle Teilanlagen mit Vorteil verwendet werden können. (Anspruch 30)

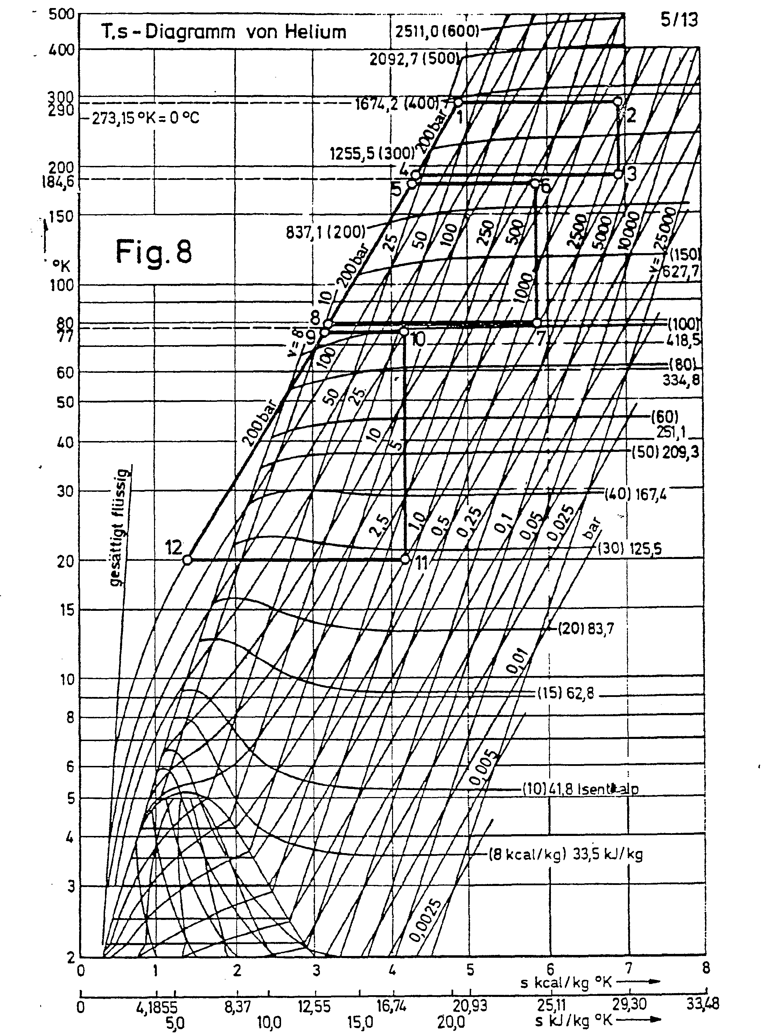

Fig. 8 zeigt einen Komplex, bestehend aus drei Teilanlagen von je einem rechtsläufigen Kreisprozeß mit Helium als Arbeitsmedium. Die oberste Teilanlage, die anschließend besonders erläutert werden soll, umfaßt den Temperaturbereich von $290^{\circ}K$ bis $184,6^{\circ}K$, die mittlere Teilanlage den Bereich von $184,6^{\circ}K$ bis $77^{\circ}K$ und die unterste Teilanlage den Bereich von $77^{\circ}K$ bis $20^{\circ}K$. Somit umschließt der Komplex einen lückenlosen Gesamt-Temperaturbereich von $290^{\circ}K$ bis $20^{\circ}K$. - - In der obersten Teilanlage 1 - 2 - 3 - 4 - 1 ist der Diagramm-Punkt 1 ein Sammelkessel mit gespanntem Heliumgas von etwa Außentemperatur (200 bar Druck bei $290^{\circ}K$). In der ersten Stufe 1 bis 2 wird das gepresste Gas isothermisch unter Abgabe von 2531 kJ mechanischer Arbeit von 200 bar auf etwa 3 bar entspannt.

Die der gewonnenen Arbeit äquivalente Wärmemenge wird der Außenwärme (z.B. Meerwasser) entzogen. (Die Oberflächentemperatur von Meerwasser bleibt praktisch konstant.) - In der zweiten Stufe der obersten Teilanlage von Punkt 2 bis 3 wird durch adiabatische Expansion 544 kJ mechanische Arbeit gewonnen. Es folgt von Punkt 3 bis Punkt 4 eine isothermische Kompression bei 184,6°K von 1 bar auf 200 bar, für welche eine Arbeit von 2032,3 kJ aufgewendet werden muß. Vom Sammelpunkt 4 wird das auf 200 bar gepresste Helium durch Außenwärme (Meerwasser) wieder auf die Ausgangstemperatur (290°K) bei gleichem Druck (200 bar) aufgeheizt. Die theoretische Energie-Bilanz für die oberste Teilanlage lautet wie folgt:

Gewonnene mechanische Energie: 2531 kJ + 544 kJ = 3075 kJ
Verbrauchte mechanische Energie = 2032,3 kJ
Somit theoretisch: Netto-Gewinn an Arbeitsenergie = 1042,7 kJ

An Außenwärme wird verbraucht in der Stufe 1 - 2: 2531 kJ ferner durch die Aufheizung des Heliums von Punkt 4 bis Punkt 1: 556,9 kJ. Außerdem ist zu berücksichtigen, daß von der Kompressionsarbeit 3 bis 4 (2032,3 kJ) ein erheblicher Anteil in die mittlere Teilanlage 5 - 6 - 7 - 8 - 5 übernommen und dort in Stufe 5 - 6 durch isothermische Expansion in 1 371,2 kJ Nutzarbeit umgesetzt wird. Es muß auch noch beachtet werden, daß gegenüber dem Leistungsfaktor 1,0 der obersten Teilanlage die beiden anderen Teilanlagen einen erhöhten Leistungsfaktor aufweisen. So hat die mittlere Teilanlage den Leistungsfaktor 1,1528 und die unterste Teilanlage den Leistungsfaktor 1,5563.

Für alle drei Teilanlagen ergibt sich die folgende Energiebilanz:

Gewonnene mechanische Energie 6064,8 kJ
Verbrauchte mechanische Energie 3352,2 kJ
Das ergibt theoretisch den Nettogewinn an Nutzarbeit 2712,6 kJ

Dazu kommt noch ein Anteil am Energie-Inhalt der Kompressionsstufe 11 bis 12 der untersten Teilanlage.

- 24 -

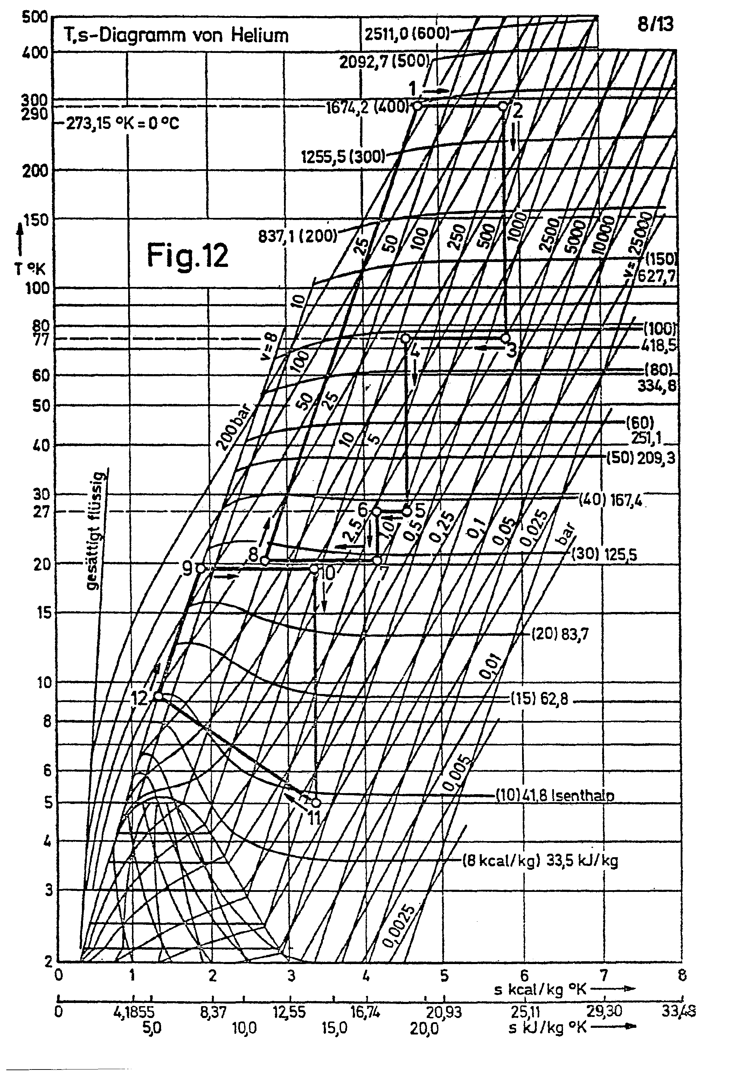

Offen bleibt hier die Frage, wie der Kältebedarf für die unterste Stufe 11 bis 12 gedeckt werden soll. Diese Frage wird zum Teil durch das Ausführungsbeispiel gemäß Fig. 12 und 11 und zum Teil durch den späteren Abschnitt "Deckung des zusätzlichen Kältebedarfs" beantwortet.

Die gewählten Temperaturhöhen der drei einzelnen Teilanlagen sind wie folgt begründet: Die höchste Temperatur der obersten Teilanlage ($290^{\circ}$K) entspricht jeweils der Außentemperatur (z.B. Oberfläche des Meerwassers). Der Wärmetausch zwischen oberster und mittlerer Teilanlage bei $184,6^{\circ}$K entspricht dem Siedepunkt von $N_2O$-Gas bei 1 bar. (Als Wärmetauscher werden wieder Wärme-Rohre (heat pipes) mit kapillarer Struktur (Textil-Dochten) empfohlen.) Der Wärmetausch zwischen mittlerer und unterster Teilanlage ist auf $77^{\circ}$K entsprechend dem Siedepunkt von Stickstoff bei 1 bar eingestellt. - Die unterste Temperaturhöhe der unteren Teilanlage entspricht dem Siedepunkt von Wasserstoff von 1 bar, also $20^{\circ}$K. Diese Wärmetausch-Stufe dient sowohl zur Stabilisierung des Temperaturausgleichs als auch zur Kompensation der in Stufe 11 - 12 anfallenden Wärme durch zusätzliche unabhängige Kältequellen.

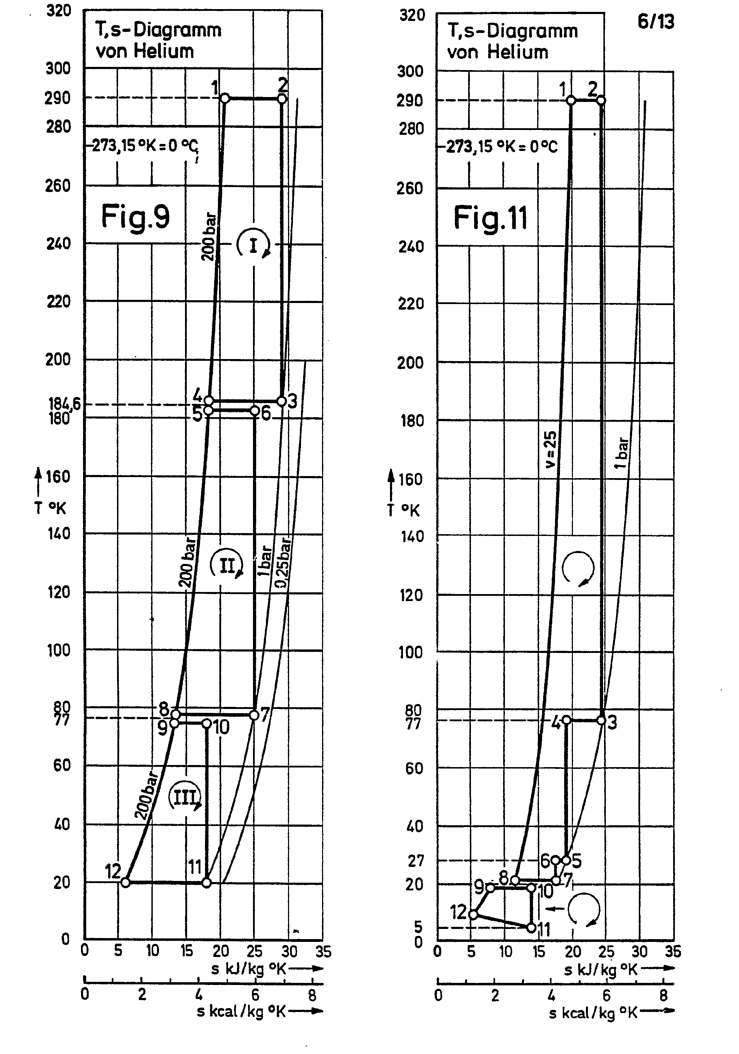

Figur 9 zeigt den Komplex von Figur 8 in linearem Temperatur-Maßstab, um dadurch die Verzerrungen des unteren Temperaturbereiches durch logarithmischen Temperatur-Maßstab gutzumachen. So kann man auch besser erkennen, daß das Problem des zusätzlichen Kältebedarfs im unteren Temperaturgebiet gegenüber der gewonnenen Nutzarbeit in den oberen Teilanlagen nur geringes Gewicht haben kann.

Die Bevorzugung von Wärme-Rohren mit Kapillar-Struktur ist begründet durch die unwahrscheinlich hohe Wärmeleitfähigkeit solcher Wärme-Rohre gegenüber metallischen Wärmeleitern. (Anspruch 31)

## L. Ausführungsbeispiele mit Isochoren

In den T,s-Diagrammen wird die Zustandsänderung von Gasen unter dem Einfluß von Wärmeeinwirkung durch zwei verschiedene Arten von Linienzügen dargestellt: erstens als Isobaren mit dem Kennzeichen des gleichbleibenden Druckes und zweitens als Isochoren mit dem Kennzeichen des gleichbleibenden Volumens. Der aus dem Diagramm erkennbare Unterschied zwischen den beiden Linienzügen besteht darin, daß die Isochoren steiler sind als die Isobaren und daß die Isochoren von der in höheren Temperaturgebieten feststellbaren Parallelität des Linienverlaufs auch in der Nähe der Sättigungsgebiete weit weniger abweichen als die Isobaren. Durch die Wahl von Isochoren für die Aufheizung des entspannten Arbeitsmediums kann man also den Nachteil des gestörten Verlaufes der Isobaren-Linien im Sättigungsgebiet und in deren nächster Umgebung vermeiden oder wenigstens verringern. Die stärkere Steilheit der Isochoren in allen Temperaturgebieten ermöglicht auch den Vorteil, zur Gewinnung von unabhängiger Nutzkälte Kreisprozesse in Dreiecksform zu verwenden, die bei Verwendung von Isochoren kleinere spitze Winkel aufweisen als bei Isobaren. Dadurch kann man den frei verfügbaren Kälteanteil solcher Isochoren-Dreiecke vergrößern.

Neben den angeführten Vorteilen bei Verwendung von Isochoren in erfindungsgemäßen Anlagen sind leider auch Nachteile damit verbunden. Das gilt vor allem für die aus der Definition der Isochore hervorgehende strenge Bedingung, daß Temperaturänderungen in einem konstanten Volumen erfolgen müssen. Streng genommen müßte also bei isochorer Erhitzung von Medien das zugehörige Gefäß, der Kessel, die Leitung usw. allseits verschlossen bleiben. Dann wäre aber ein kontinuierlicher Kreisprozeß mit isochor erwärmten Gasen gar nicht möglich. - Diese Schwierigkeit kann nach dem erfindungsgemäßen Vorschlag dadurch behoben werden, daß das Gefäß oder der Kessel, in welchem ein Gas isochor erhitzt werden soll, der oben erwähnten Bedingung der Konstanthaltung des Volumens dadurch gerecht wird, daß ein konstant bleibendes Gefäß-Volumen von einem Arbeitsmedium durchflossen wird, aber zu Beginn und am Ende des Durchfluß-Raumes Ventile vorgesehen sind, die es ermöglichen, daß der Durchfluß von gasförmigen Medien ständig so gesteuert wird, daß die gleiche Menge (Masse) Gas in den Durchfluß-Raum eintritt, die gleichzeitig aus diesem Raum ausströmt. - Das ist gewiß eine Unbequemlichkeit, aber nicht undurchführbar. - - Eine weitere Maßnahme wird für isochor zu erwärmende Medien vorzusehen sein: die Verwendung mehrerer paralleler Leitungen für den isochoren Abschnitt. (Anspruch 32 und 33)

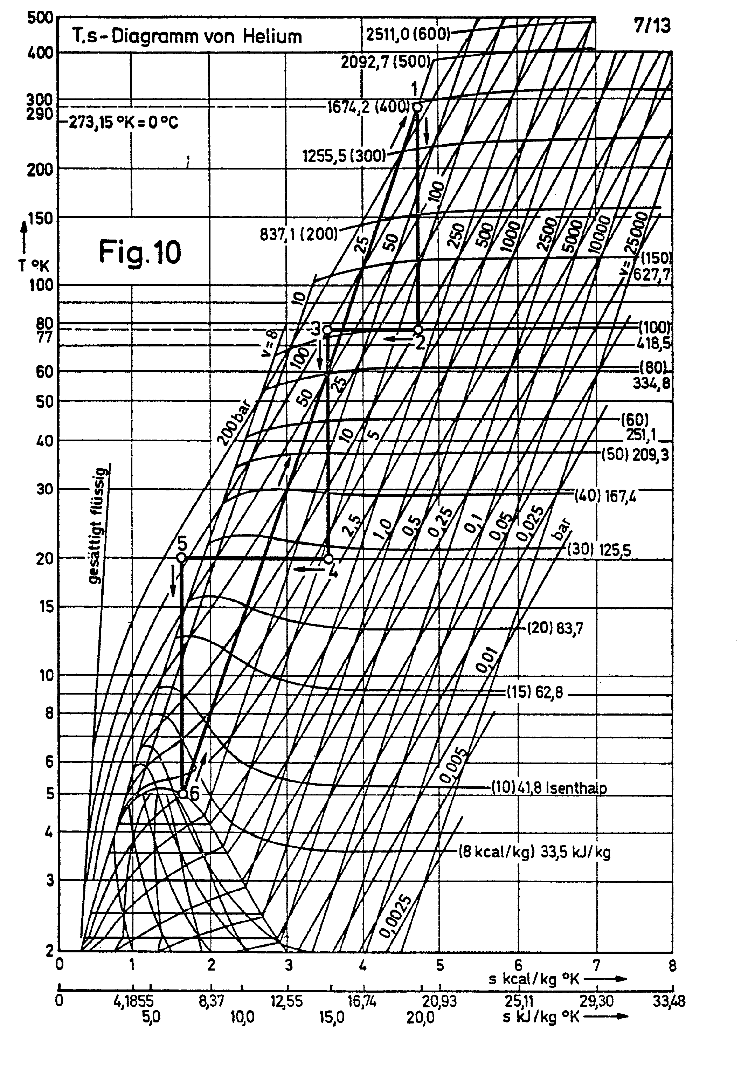

Figur 10 zeigt einen dreistufigen Kreisprozeß (1-2-3-4-5-6-1) mit einer durchgehenden Isochore (6-1) für die Aufheizung durch die Außenwärme von $5^{o}K$ bis $290^{o}K$. Nach der Energiebilanz dieses Prozesses werden unter Zugrundelegung der Diagramm-Zahlen etwa 1600 kJ an mechanischer Arbeit gewonnen, denen nur etwa ein Drittel dieser Energiemenge an verbrauchter mechanischer Energie gegenüber steht.

Figur 11 und 12 zeigen ein weiteres Beispiel für die Verwendung von Isochoren. Der Prozeß spielt sich hier in zwei rechtsläufigen Teilanlagen ab. Die obere Teilanlage 1-2-3-4-5-6-7-8-1 ergibt durch die vorausgeschickte isothermische Expansionsstufe 1 - 2 eine besonders günstige Energie-Bilanz. Die untere ebenfalls rechtsläufige Teilanlage (9-10-11-12-9) vergrößert noch die gewonnene Energie. Für die unterste Stufe 11 bis 12 wird möglicherweise eine besondere Kühlung z.B. aus einer unabhängigen Kältequelle erforderlich sein. Der hierfür erforderliche Energiebedarf in diesem unteren Temperaturbereich ist aber gering, verglichen mit der Größenordnung des oberen Kreisprozesses. Dies zeigt auch Figur 12 in linearem Maßstab. Der Wärmetauscher zwischen dem oberen und unteren Prozeß bei $20^{o}K$ stützt sich auf die stabilisierende Wirkung eines Wärme-Rohres (heat pipe) mit Docht-Kapillare für Wasserstoff bei 1 bar als Arbeitsmedium des Wärme-Rohres.

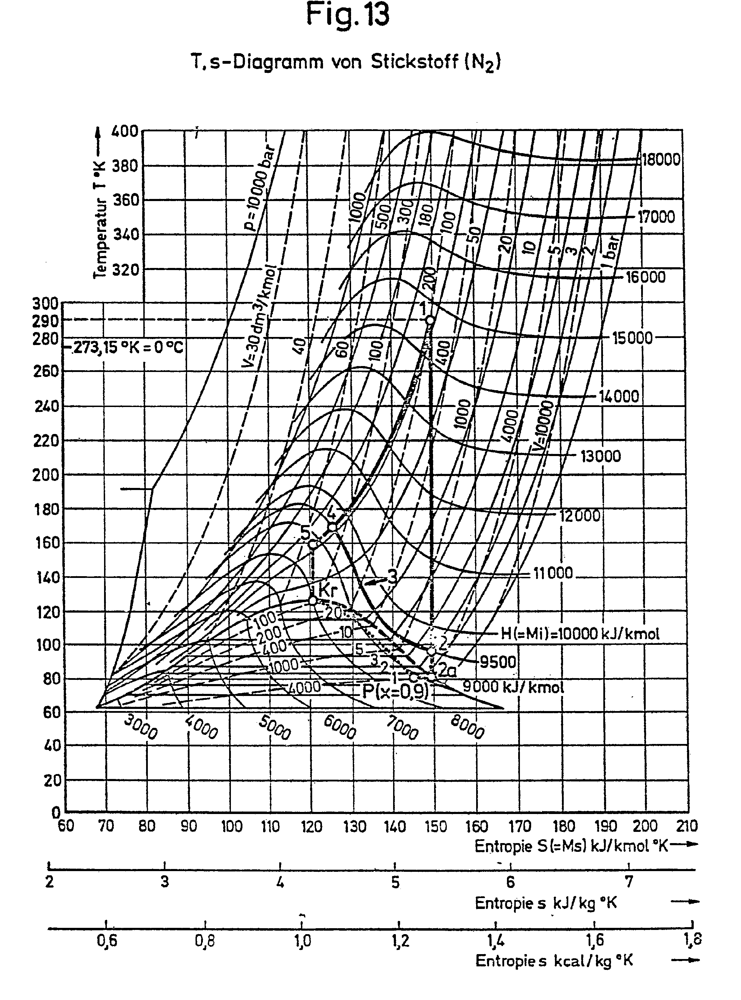

Die Figuren 13, 14 und 15 zeigen auf dem gleichen T,s-Diagramm für Stickstoff mit linearem Temperatur-Maßstab eine Reihe von Varianten für weitere Ausführungsbeispiele. - Figur 13 zeigt rechtsläufige Kreisprozesse mit einer Isobare für ca. 110 bar, auf welcher bei $290^oK$ der Ausgangspunkt 1 liegt. Die erste Variante 1-2-4-1 benützt von 2 - 4 die Isenthalpe 9500 kJ/kmol, um ohne großen Aufwand bei Punkt 4 auf die Isobare 110 zu stoßen. Aber von 2 bis 4 ist ein langer Weg, und niemand weiß sicher, wie dieser Weg von Punkt 2 aus gefunden und verfolgt werden kann. Bei einer normalen Kompression von Punkt 2 aus kommt man eher auf Punkt 1 zurück. Kühlung ist nach dem Diagramm auch nicht das Richtige. Bleibt der Versuch einer behutsamen Kompression mit Wärme-Rohr-Stabilisierung, die der jeweiligen Temperatur angepaßt wird. - Für die zweite Variante 1-2a-Kr-5-1 (gestrichelte Linie) längs der Grenze des Sättigungsgebietes besteht wenigstens die Aussicht, ohne größere Mühe den kritischen Punkt Kr zu erreichen und von dort über 5 nach 1 zu gelangen. Die nächste Variante 1-2a-P(x=0,9)-Kr-5-1 (punktierte Linie) dürfte noch rascher zum kritischen Punkt Kr führen, weil innerhalb des Sättigungsgebietes alle Wege zum kritischen Punkt führen. Aber alle diese Varianten von Figur 13 befriedigen nicht und versprechen keine günstige Energie-Bilanz.

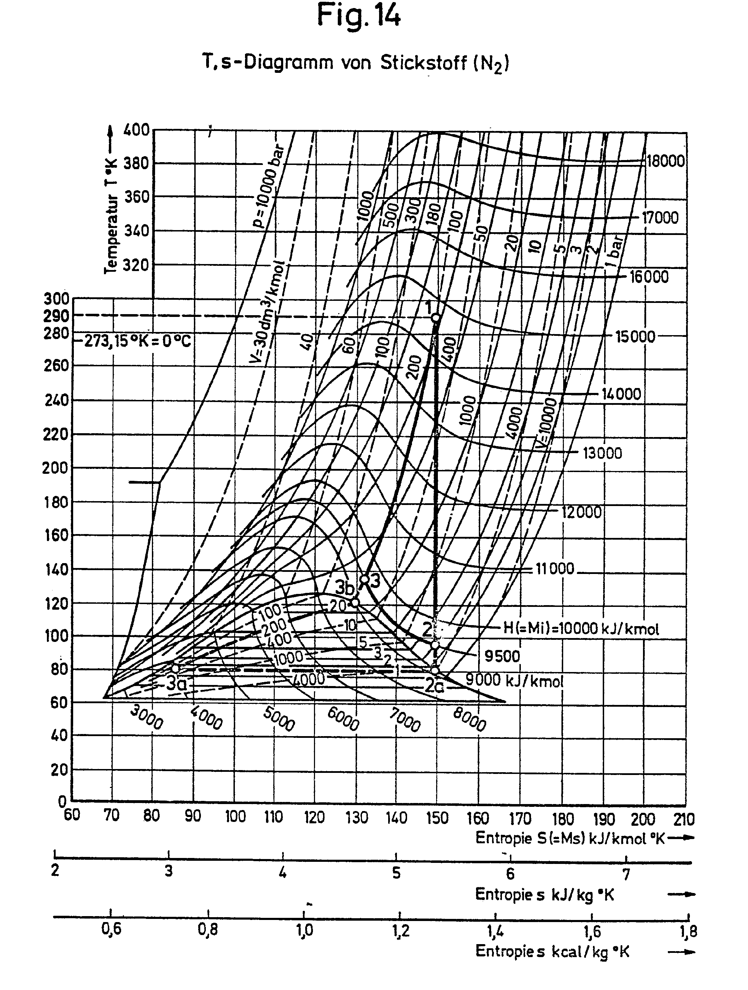

Figur 14. mit dem Kreisprozeß 1-2-3-1 nützt den Vorteil der Isochore 3-1 aus. Es bleibt aber die zu Figur 13 bereits erwähnte Schwierigkeit, sicher von 2 nach 3 zu gelangen. Die in Figur 14 in gestrichelter Linie gezeichnete zweite Variante 1-2a-3a-3b-1 erscheint an sich ohne Probleme, ergibt aber eine miserable Energie-Bilanz.

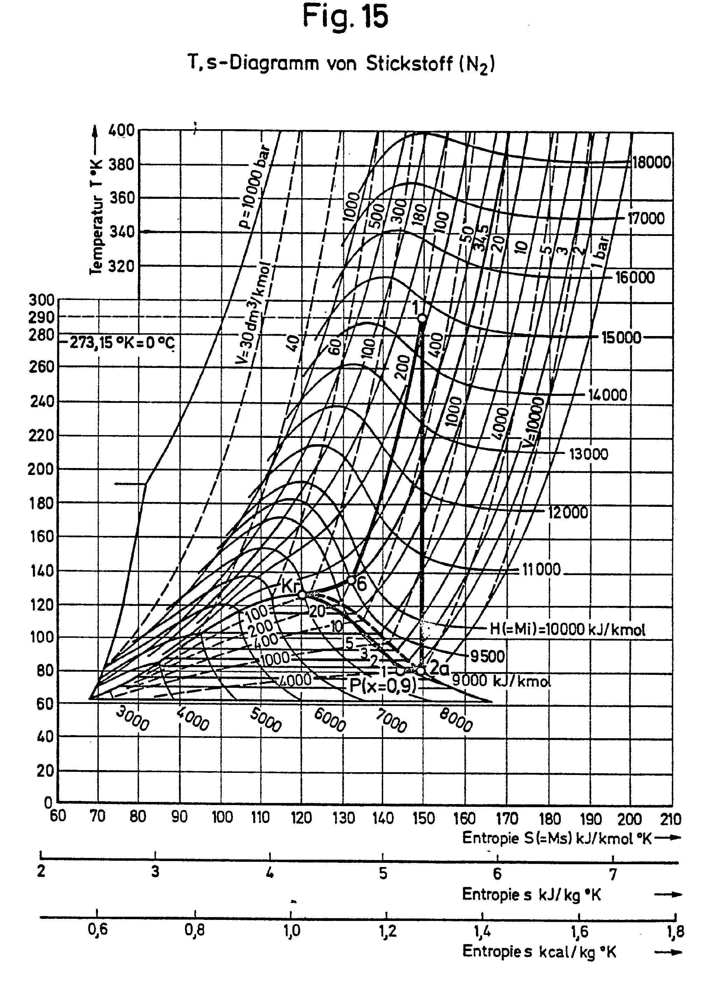

Figur 15 kommt vielleicht einer brauchbaren Lösung am nächsten. Durch den Weg über 2a und von dort über das Sättigungsgebiet Punkt P(x=0,9) entfällt jedes Dilemma bei der Kompression,

Die Erwägungen, die zu den vorstehenden Varianten mit Stickstoff als Medium geführt haben, sind deswegen nicht auf dieses Gas beschränkt, weil die T,s-Diagramme einer Reihe von Gasen in ihren Sättigungsgebieten eine unverkennbare Ähnlichkeit mit dem Stickstoff-Diagramm aufweisen. Es sind dies vor allem die Gase: Helium, Wasserstoff, Neon, Argon. Auch trockene Luft darf in diesem Zusammenhang nicht vergessen werden, schon deswegen, weil sich viele Erwägungen dieses Erfindungskomplexes auf das Wesen der Druckluft-Technik stützen.

Bei allen in diesem Abschnitt angeführten Arbeitsmedien kann man die Energiebilanz nicht unbeträchtlich verbessern, wenn man der ersten adiabatischen Expansionsstufe eine isothermische Expansionsstufe als oberste Temperaturstufe vorausschickt, etwa nach dem Muster der Figuren 8, 9 oder 11, 12 (Anspr. 34-36)

## M. Deckung des zusätzlichen Kältebedarfs

Die im vorliegenden Erfindungskomplex offenbarten thermodynamischen Kreisprozesse benötigen für ihren Betrieb an bestimmten Stellen des Prozeßverlaufes Kälteeinwirkung. - - Kälteerzeuger mannigfacher Art, die mechanische Arbeit in Kälte der verschiedensten Temperaturzonen umsetzen, gehören zum Stande der Technik.

Im Beispiel der Figur 11, 12 wurde für eine Anlage 1-2-3-4-5-6-7-8-9-1 bereits eine neuartige Anlage 9-10-11-12-9 offenbart, welche die abzuführende Wärme der darüberliegenden Prozeßstufe 8 - 9 kompensiert.

Im Zusammenhang mit der Weiterentwicklung des Komplexes wird nunmehr auch noch eine besondere Kälteerzeugungsanlage vorgeschlagen, die von den thermodynamischen Hauptprozessen vollkommen unabhängig ist und zusätzlichen Kältebedarf aller Art zu decken geeignet ist.

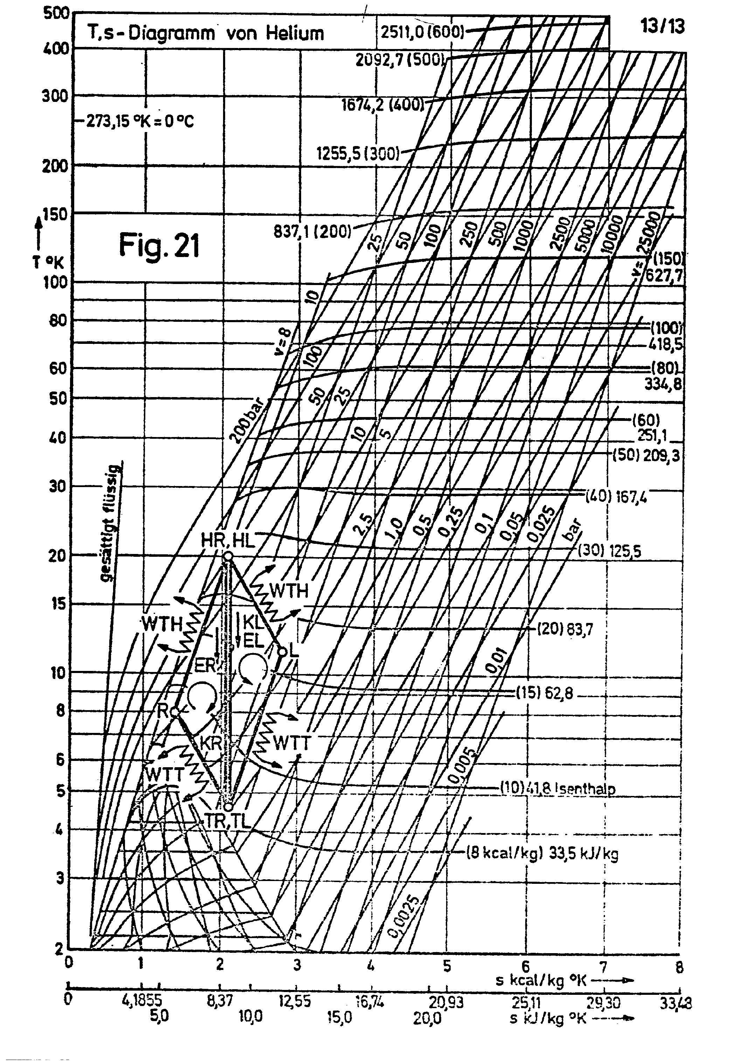

Figur 21 zeigt in einem T,s-Diagramm für Helium (im logarithmischen Maßstab) ein Beispiel für eine solche unabhängige Anlage. Diese Anlage selbst ist eine Kombination eines rechtsläufigen Kreisprozesses HR-TR-R-HR mit einem linksläufigen Prozeß HL-L-TL-HL, von denen jeder für sich in Betrieb gesetzt und gehalten werden kann.

Es können aber auch beide so kombiniert werden, wie Fig. 21 zeigt, und durch Wärmetauscher verbunden werden. Im rechtsläufigen Teil ist ER die Expansionsmaschine, KR der Kompressor, im linksläufigen Teil wiederum ist EL die Expansionsmaschine, KL der Kompressor. - Eine solche Anlage ist sehr vielseitig verwendbar. Sie bietet u.a. die Möglichkeit, die Temperaturhöhe der zu erzeugenden Kälte nach oben oder nach unten dadurch zu verschieben, daß nicht alle in TR und TL entstehende Kälte verbraucht wird, so daß auch nach HR und HL kälteres Gas gelangt. Man kann auch in Sammelgefäßen in TR und TL Vorrat an kaltem Gas ansammeln. (Anspruch 37)

Für Wärmetauscher von erfindungsgemäße Anlagen bieten kombinierte thermodynamische Kälteerzeuger gemäß Fig. 21 noch die folgende Möglichkeit: Die Sammelgefäße der höheren Stufe HR und HL werden vereinigt, ebenso die Sammelgefäße TR und TL der tieferen Stufe. Das letztere Sammelgefäß wird jeweils mit dem Wärmetauscher einer Stufe des Hauptprozesses so vereinigt, daß durch Thermostaten der Zufluß von kaltem Gas zum Wärmetauscher so geregelt werden kann, daß die eingestellte Temperatur des Wärmetauschers automatisch konstant gehalten wird. (Anspruch 38)

## N. Neuartige Wärme-Rohre mit Kapillar-Struktur

Um die Vorteile der Wärme-Rohre für den Erfindungskomplex gründlich auszuschöpfen, wird in dieser Anmeldung auch noch eine neue fortschrittliche Gestaltung der Wärme-Rohre vorgeschlagen und nachstehend beschrieben:

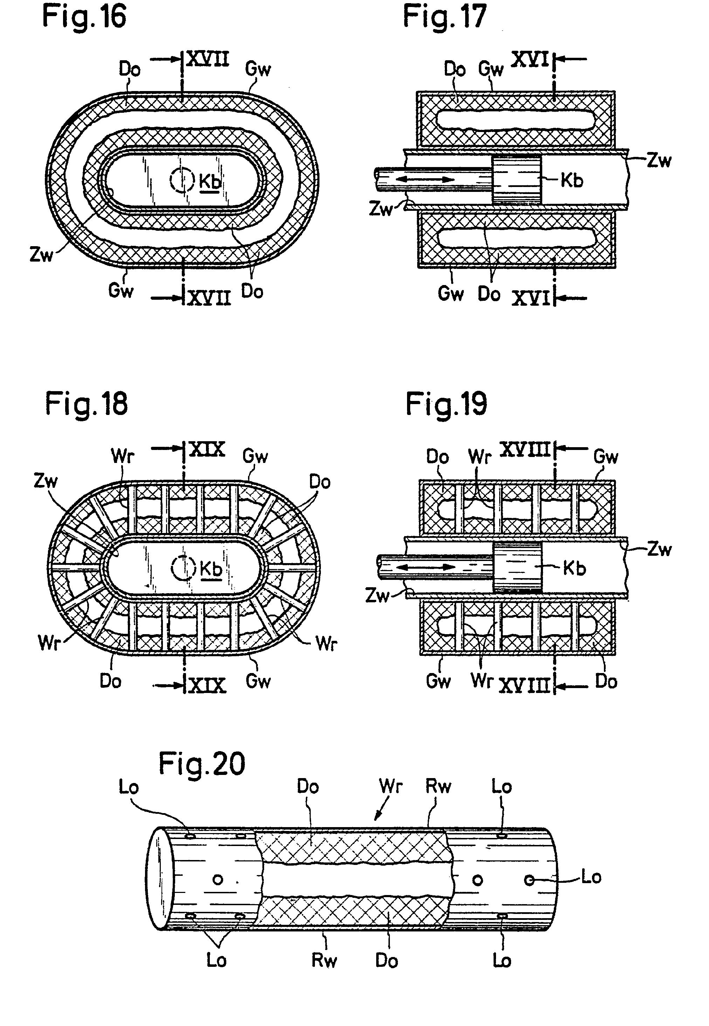

Fig.16 und 17 zeigen eine flachgedrückte Zylinderwand (Zw) mit Kolben (Kb) eingebettet in ein großes Wärmerohr mit Docht (Do). Die metallische Gehäusewand (Gw) des großen Wärme-Rohres nimmt z.B. bei isothermischer Expansion des rechtsläufigen Kreisprozesses aus dem Meerwasser Wärme auf, welche außerordentlich rasch durch die Kapillar-Struktur des Dochtes (Do) über die Zylinderwand auf das im Zylinder befindliche Arbeitsmedium (z.B. Helium) übertragen wird.

Fig. 18 und 19 zeigen, wie der Wärmeübergang von der Gehäusewand (Gw) zur Zylinderwand (Zw) dadurch beträchtlich gesteigert wird, daß zwischen Gehäusewand und Zylinderwand kleine geschlossene Wärmerohre (Wr) eingefügt werden, welch letztere eine Docht-Kapillare enthalten und an sich bekannt sind. Die Kombination von großem Wärmerohr (Gw) und kleinen Wärmerohren dürfte neu sein. - Der vorgeschlagenen Kombination haftet aber noch der Nachteil an, daß die vielen kleinen geschlossenen Wärmerohre (Wr) auf einen ganz bestimmten Druck entsprechend dem gewählten Fluid-Inhalt und der jeweiligen Außentemperatur eingestellt sein müssen. Bei größeren Abweichungen von der gegebenen Norm, auf die jedes einzelne Röhrchen vor dem Verschließen sorgfältig sozusagen "geeicht" werden muß, versagen alle einzelnen Röhrchen und das ganze kombinierte große Wärme-Rohr müßte durch ein anderes für eine andere Temperatur- und Druckstufe ersetzt werden. - Dieser Mangel wird durch die nachstehende Maßnahme behoben:

Wie Fig. 20 zeigt, werden in alle Rohrwände (Rw) der kleinen Wärmerohre (Wr) Löcher (Lo) gebohrt, welch letztere es ermöglichen, daß bei größeren Temperaturänderungen das ganz große Wärmerohr und gleichzeitig auch alle kleinen Wärmerohre (Wr) unter den neuen Druck eines Arbeitsmediums von neuer Konzentration versetzt werden. - In der Praxis dürfte es dann meist genügen, daß durch eine Öffnung in der Gehäusewand (Gw) die Korrektur des Gesamtinhalts an Arbeits-Fluid vorgenommen wird. (Anspruch 39 und 40)

0001382
E.P.A.Nr. 78100054,2

Ü B E R S I C H T

über den A n m e l d e - K o m p l e x der Europäischen Patentanmeldung Nr. 78100054,2, Anmeldungs-Stichtag 1. Juni 1978 mit der Bezeichnung

"Verfahren und Anlagen zur Gewinnung von
Nutzarbeit und/oder Nutzkälte aus Wärme"

des Anmelders und Erfinders Kurt Leczkowski, wohnhaft in München.

Der Anmeldekomplex setzt sich aus den folgenden Teil-Anmeldungen beim Deutschen Patentamt München zusammen:

1.) Deutsche Hauptanmeldung P 26 54 097.6-13, Anmeldetag: 29.11.76;

2.) Erste deutsche Zusatzanmeldung P 27 45 700.7-13, Anmeldetag: 11.10.77.

3.) Zweite deutsche Zusatzanmeldung P 28 23 447.1-13, Anmeldetag: 30.05.78.

Zu den einzelnen deutschen Teilanmeldungen gehören die in der Aufstellung auf Seite 2 angegebenen Kapitel und Abschnitte mit den jeweils zugehörigen Patentansprüchen und Figuren, die zusammengefügt die gemeinsame Europäische Patentanmeldung ergeben. Die Nummerierung dieser letzteren weicht von derjenigen der deutschen Teilanmeldungen ab. Die

A u f s t e l l u n g auf Seite 2
ist eine Gegenüberstellung der Nummerierungen von Europäischer Patentanmeldung (E.P.A.) und den deutschen Teilanmeldungen, geordnet nach Kapiteln bzw. Abschnitten.

| Deutsche Teil-anmeldung | Kapitel (Abschnitte) und Bezeichnung | Nummern der Ansprüche | | Nummern der Figuren | |
|---|---|---|---|---|---|
| | | E.P.A. | Dt.Teil-Anmeldg. | E.P.A. | Dt.Teil-Anmeldg. |
| Deutsche Haupt-Anmeldung (L 100) | A.Vorgeschichte und Aufgabe | | | | |
| | B. Der allgemeine Lösungsgedanke | 1 | 1 | | |
| | C.Gewinnung von Nutzarbeit aus Wärme | 2-6 7-12 | 2-6 7-12 | | |
| | D.Wärmerohre mit Kapillar-Struktur | 13,14 | 13,14 | | |
| | E.Kombinationen mit Wärmepumpen-Anlagen | 15-17 | 15-17 | | |
| | F.Speicherung von Energie | 18 | 18 | | |
| | G.Arbeitsmedien | 19 | 19 | | |
| | H.Nutzkälte und Meerwasserentsalzung | 20,21 | 20,21 | | |
| Erste deutsche Zusatz-Anmeldung (L 101) | J.Ausführungsbeispiele für thermische Prozeße: Helium als Arbeitsmedium | 22,23 | 1,2 | 1,2 3,4 5,6 7 | 1a,1b 2a,2b 3a,3b 4 |
| | Andere Gase als Arbeitsmedien | 24 | 3 | | |
| | Flüssige Arbeitsmedien zur Stabilisierung | 25 | 4 | | |
| | Wärmerohre mit Kapillarstruktur | 26 | 5 | | |
| | Isothermische Änderung der Gasspannung | 27 | 6 | | |
| | Mischgase als Arbeitsmedien | 28,29 | 7,8 | | |
| Zweite deutsche Zusatz-Anmeldung (L 102) | K.Weitere Ausführungsbeispiele | 30,31 | 1,2 | 8,9 | 5a,5b |
| | L. Ausführungsbeispiele mit Isochoren | 32-36 | 3-7 | 10-15 | 6,7a,7b 8a,8b,8c |
| | M. Deckung zusätzl. Kühlbedarfs | 37,38 | 8,9 | 21 | 12 |
| | N. Neuartige Wärme-Rohre mit Kapillar-Struktur | 39,40 | 10,11 | 16,17 18,19 20 | 9a,9b 10a, 10b 11 |

Verfahren und Anlagen zur Gewinnung von Nutzarbeit und/oder
Nutzkälte aus Wärme


P A T E N T A N S P R Ü C H E


Anspruch 1: Verfahren und Anlagen zur laufenden Gewinnung
von Nutzarbeit und/oder Nutzkälte aus verschiedenen Wärmequellen wie Sonnenstrahlung, Außenwärme (das ist die Wärme
der Erdoberfläche, der Gewässer und Meere, der Atmosphäre),
Brennstoffe, Kernenergie, Speicherenergie, Wärme des Erdinnern und andere, bei mannigfach gegebenen geographischen,
klimatischen, tages- und jahreszeitlichen und anderen wechselnden Verhältnissen auf der Erde und/oder in der Sphäre
der Erdsatelliten, auf dem Monde, den Planeten, im Weltraum,
bei gutem thermischen Wirkungsgrad und ohne ökologische Störungen durch unverwertete Abwärme auf der Erde, dadurch gekennzeichnet,

(1) daß zur Umwandlung von Wärme aus den genannten Wärmequellen in Nutzarbeit mindestens ein thermodynamischer
Kreisprozeß verwendet wird, dessen zeitlicher Ablauf im
Temperatur-Entropie-Diagramm im Sinne des Uhrzeigers erfolgt
(rechtsläufiger Kreisprozeß);

(2) daß als Arbeitsmedien solcher Kreisprozesse Gase
oder Gasgemische ausgewählt werden, deren Tripelpunkte dem
absoluten Nullpunkt tunlich nahekommen;

(3) daß auf Erden die rechtsläufigen Kreisprozesse zur
Gänze oder zu einem erheblichen Teil im Temperaturbereich
zwischen Außentemperatur und absolutem Nullpunkt verlaufen;

(4) daß außerhalb der Erdsphäre als Hauptwärmequelle
Sonnenstrahlung verwendet wird und daß die tiefste Temperatur des rechtsläufigen Kreisprozesses dem absoluten Nullpunkt tunlich nahe kommt;

(5) daß in diesen Kreisprozeß-Anlagen Einrichtungen vorgesehen sind, daß bevorzugt Sonnenstrahlung und/oder Außenwärme, ferner - soweit erforderlich - auch andere Wärmequellen zum Aufheizen, Verdampfen und/oder zur Druckerhöhung des Arbeitsmediums Verwendung finden können;

(6) daß bei Anlagen für den irdischen Bereich Einrichtungen vorgesehen sein können, um aus den abgekühlten Arbeitsmedien vom Bereich der tiefsten Temperaturstufe der Kreisprozesse an bis zur Außentemperatur durch Wärmetausch ohne Mehraufwand von Energie N u t z k ä l t e zu gewinnen.

Anspruch 2: Kreisprozeß nach Anspruch 1, dadurch gekennzeichnet, daß die höchste Temperaturstufe des Prozesses der Außentemperatur bzw. der Oberflächentemperatur des Meerwassers entspricht.

Anspruch 3: Kreisprozeß nach Anspruch 1, dadurch gekennzeichnet, daß als höchste Temperaturstufe des Prozesses etwa 75$^\circ$C gewählt wird.

Anspruch 4: Verfahren und Anlagen nach einem der vorhergehenden Ansprüche, dadurch gekennzeichnet, daß die Entspannung des Arbeitsgases vorzugsweise adiabatisch erfolgt, ggf. nach vorhergehender nahezu isothermischer und/oder polytropischer Entspannung.

Anspruch 5: Verfahren und Anlagen nach Anspruch 1 bis 4, dadurch gekennzeichnet, daß gleichzeitig mit dem rechtsläufigen Kreisprozeß mindestens ein linksläufiger thermodynamischer Kreisprozeß abläuft, in welchem die Kältemenge erzeugt wird, die erforderlich ist, um laufend dem Arbeitsmedium des rechtsläufigen Prozesses zusätzlich so viel Wärme zu entziehen, daß dieses Medium sich vollständig verflüssigt.

Anspruch 6: Kreisprozeßanlage nach Anspruch 1 - 5, dadurch gekennzeichnet,

(1) daß das Arbeitsmedium des rechtsläufigen Kreisprozesses in der kältesten Prozeßstufe sich in flüssigem Aggregatzustand befindet,

(2) daß dieses flüssige Medium laufend in den Kessel gedrückt, dort durch Wärmeaustausch mit den Wärmequellen laufend aufgeheizt, verdampft und ggf. überhitzt wird,

- 3 -

(3) daß das gespannte Medium bei seiner maximalen Temperatur im Kessel oder einem besonderen Behälter gesammelt wird,

(4) daß sodann das gespannte Medium in Expansionsmaschinen unter Leistung von Nutzarbeit entspannt wird,

(5) daß durch Steuerung der Entspannung und - soweit erforderlich - durch zusätzlichen Entzug von Wärme das Arbeitsmedium wieder auf seine tiefe Ausgangstemperatur beim zugehörigen Druck und beim Ausgangs-Aggregatzustand zurückgeführt wird, worauf

(6) das Spiel sich wiederholt.

Anspruch 7: Anlagen nach einem oder mehreren der vorhergehenden Ansprüche, dadurch gekennzeichnet, daß der zusätzliche Entzug von Wärme aus dem Arbeitsmedium,des rechtsläufigen Kreisprozesses während und/oder nach dem Expansionsvorgang dadurch erfolgt, daß in einer Expansionsstufe oder anschließend an diese die hohle Metallwand der Expansionsmaschine oder der Ableitung aus dieser Maschine von noch kälteren Medien durchströmt wird.

Anspruch 8: Verfahren und Anlagen nach einem oder mehreren vorhergehenden Ansprüchen, dadurch gekennzeichnet, daß nach der letzten Expansionssrufe laufend der noch nicht verflüssigte Teil des Arbeitsmediums noch einmal in die letzte Entspannungsstufe unter dem dort herrschenden Anfangsdruck jedoch bei beträchtlich kälterer Temperatur zurückgeführt und zusammen mit dem frischen gasförmigen Arbeitsmedium daselbst noch einmal entspannt und auf diese Weise schließlich vollständig verflüssigt wird.

Anspruch 9: Verfahren und Anlagen nach einem oder mehreren der vorhergehenden Ansprüche, dadurch gekennzeichnet, daß die kalten Gase, die im linksläufigen Kreisprozeß gewonnen werden, im Gegenstrom zum Lauf des Mediums des rechtsläufigen Kreisprozesses zuerst,vom Gebiet des Tripelpunktes ausgehend, im Wärmetausch die vollständige Verflüssigung und anschließend durch Durchlaufen der hohlen Metallwände der Expansionsmaschinen die zusätzliche Kühlung des Arbeitsmediums des rechtslaufenden Kreisprozesses über die Wirkung der adiabatischen Kühlung hinaus bewirken.

Anspruch 10: Verfahren und Anlagen nach mindestens einem der vorhergehenden Ansprüche, dadurch gekennzeichnet, daß die Arbeitsmedien der linksläufigen Prozesse Tripelpunkte aufweisen, deren Temperatur tiefer liegt als die Tripelpunkte der Medien für den zugehörigen rechtsläufigen Kreisprozeß.

Anspruch 11: Verfahren und Anlagen nach mindestens einem der vorhergehenden Ansprüche, dadurch gekennzeichnet, daß der Verlauf der Entspannungen derart gesteuert wird, daß die Gase der rechtsläufigen Kreisprozesse verflüssigt werden, während die der linksläufigen Prozesse gasförmig bleiben.

Anspruch 12: Verfahren und Anlagen gemäß mindestens einem der vorhergehenden Ansprüche, dadurch gekennzeichnet, daß Einrichtungen vorgesehen sind, den zügigen Ablauf aller Stufen der Kreisprozesse entsprechend dem Tempo der adiabatischen Entspannungsstufen zu gewährleisten.

Anspruch 13: Kreisprozesse nach einem oder mehreren der vorhergehenden Ansprüche, dadurch gekennzeichnet, daß zum Wärmetausch anstatt oder neben den traditionellen Wärmetauschvorrichtungen geschlossene Wärmerohre (Heat Pipes) mit Kapillarstrukturen Verwendung finden.

Anspruch 14: Kreisprozesse nach Anspruch 13, dadurch gekennzeichnet, daß die Kapillarstrukturen in den Wärmerohren aus dochtartigen Stoffen bestehen.

Anspruch 15: Verfahren und Anlagen nach mindestens einem der vorhergehenden Ansprüche, dadurch gekennzeichnet, daß dieselben mit Wärmepumpen-Anlagen kombiniert werden.

Anspruch 16: Verfahren und Anlagen nach Anspruch 15, dadurch gekennzeichnet, daß dieselben zum Aufheizen von Speicherkesseln für Heizwerke Verwendung finden.

Anspruch 17: Verfahren und Anlagen nach Anspruch 15, dadurch gekennzeichnet, daß dieselben zur Erwärmung von Heizkesseln von Kraftwerksanlagen für Kreisprozesse mit höchster Temperaturstufe von etwa 75$^\circ$ C gemäß Anspruch 3 dienen.

Anspruch 18: Anlagen nach einem oder mehreren der vorhergehenden Ansprüche, dadurch gekennzeichnet, daß Einrichtungen vorgesehen sind, daß bei zeitweiliger Verringerung des Bedarfes

- 5 -                          0001382

an Nutzarbeit die in der Anlage verfügbaren, aber nicht sofort benötigten Mengen an Sonnenstrahlungswärme und/oder Aussenwärme zuerst in der Anlage in Nutzarbeit umgewandelt werden und diese unmittelbar anschließend in Speicherenergie umgewandelt wird: z.B. Aufladung elektrischer Akkumulatoren, Pumpen von Wasser in hochgelegenen Staubecken, Erzeugung von hochgespannter Druckluft, Energieversorgung elektrochemischer und elektrometallurgischer Anlagen, Elektrolyse von Wasser u.a.

Anspruch 19: Anlagen nach mindestens einem der vorhergehenden Ansprüche, dadurch gekennzeichnet, daß solche Anlagen sich aus mehreren Teilanlagen für rechtsläufige Kreisprozesse mit jeweils verschiedenen Arbeitsmedien zusammensetzen und daß vom tiefsten Temperaturgebiet angefangen bis zum höchsten die Kreisprozesse mit abgestuften Temperaturgebieten sich zu einem lückenlosen Gesamt-Temperaturgebiet zusammenschließen.

Anspruch 20: Verfahren und Anlagen nach mindestens einem der vorhergehenden Ansprüche zur Gewinnung von salzfreiem Nutzwasser aus Meerwasser, dadurch gekennzeichnet, daß vorzugsweise nach dem Vorbild der Entstehung von salzfreien Eisbergen aus Meerwasser durch Wärmeaustausch reines Eis ausgefroren und als Nutzwasser gewonnen wird.

Anspruch 21: Verfahren und Anlagen gemäß Anspruch 20, dadurch gekennzeichnet,

(1) daß Meerwasser von Außentemperatur vorzugsweise durch Nutzkälte auf etwa $0^\circ$ C abgekühlt wird;

(2) daß diesem Meerwasser von $0^\circ$ C in einer Ausfrier-Anlage durch Nutzkälte jene Wärmemengen entzogen werden, die der Schmelzwärme des reinen Wassers in der Ausfrieranlage entsprechen, wobei durch Regelung von Menge und Temperatur des Kühlmediums ferner durch Bewegung und gutes Durchmischen in dem Meerwasser-Eisgemisch ständig und durchwegs die Temperatur von $0^\circ$ C aufrechterhalten wird;

(3) daß nach Erreichen des nach Erfahrungssätzen vorgesehenen Grades der Salzanreicherung des Meerwassers dieses durch eine Siebeinrichtung abgeleitet wird;

(4) daß schließlich das abgesonderte reine Eis zum Beispiel durch Süßwasser aufgetaut und als Nutzwasser abgeleitet wird.

Ansp.22) Verfahren und Anlagen nach Anspruch 1 bis 21 dadurch gekennzeichnet, dass für den thermodynamischen Kreisprozess Helium als Arbeitsmedium gewählt wird.

Ansp.23) Verfahren und Anlagen nach Anspruch 22, dadurch gekennzeichnet, dass im rechtsläufigen Kreisprozess ohne Verflüssigung des gasförmigen Heliums die unterste Grenzlinie dieses Kreisprozesses im Temperatur-Entropie-Diagramm mit einer möglichst waagerechten Isenthalpie-Linie dieses Diagramms zusammenfällt, und dass die für den rechtsläufigen Kreisprozess erforderliche Kälte in einem besonderen linksläufigen Kälte-Kreisprozess gewonnen wird, dessen Arbeitsmedium ebenfalls Heliumgas ist.

Ansp.24) Verfahren und Anlagen nach Anspruch 22 oder 23, dadurch gekennzeichnet, dass statt Helium andere Gase wie Wasserstoff, Neon, Sauerstoff, Stickstoff, Kohlenoxyd, Argon, Stickoxydul, Kohlenwasserstoffe, Kohlendioxyd und andere verwendet werden.

Ansp.25) Verfahren und Anlagen nach wenigstens einem der vorhergehenden Ansprüche, dadurch gekennzeichnet, dass bei isothermisch verlaufenden Änderungen der Gasspannung der Arbeitsmedien in einzelnen Stufen des Prozesses flüssige Arbeitsmedien zur Stabilisierung der Temperatur verwendet werden.

Ansp.26) Verfahren und Anlagen nach Anspruch 25, dadurch gekennzeichnet, dass die Einrichtungen zur Änderung der Gasspannung des Arbeitsmediums (Kompressoren und/oder Expansionsmaschinen) in einem Behälter untergebracht sind, welcher mit der zur Stabilisierung der Temperatur dienenden Arbeitsflüssigkeit gefüllt ist, und dass diese Einrichtungen durch Hinzufügung von Kapillar-Strukturen die Funktion von Wärme-Rohren (heat pipes) ausüben können.

Ansp.27) Verfahren und Anlagen gemäss Anspruch 25 und/oder 26, dadurch gekennzeichnet, dass bei angestrebtem isothermischen Verlauf von Änderungen der Gasspannung des Arbeitsmediums mehrere Einrichtungen nebeneinander Verwendung finden und dass die Temperaturen, auf welche die einzelnen Einrichtungen eingestellt werden, die Temperaturänderungen der Isenthalpen-Linien des Arbeitsmediums berücksichtigen.

Ansp.28) Verfahren und Anlagen gemäss mindestens einem der vorhergehenden Ansprüche dadurch gekennzeichnet, dass das Arbeitsmedium des rechtsläufigen Kreisprozesses mit wenigstens einem anderen Gas gleicher Spannung gemischt wird, dass der Tripel- oder Schmelzpunkt des oder der beigemischten Gase eine höhere Temperatur aufweist als der Tripel- oder Schmelzpunkt des Arbeitsmediums für den rechtsläufigen Kreisprozess, und dass die beigemischten Stoffe in Temperaturstufen unterhalb ihres Tripel- oder Schmelzpunktes aus dem Kreisprozess ausgeschieden werden.

Ansp.29) Verfahren und Anlagen gemäss Anspruch 28, dadurch gekennzeichnet, dass Heliumgas als Arbeitsmedium des rechtsläufigen Kreisprozesses verwendet wird, dass die aus dem Kreisprozess im Verlauf der Entspannung ausgeschiedenen Stoffe in wenigstens einem besonderen Heizkessel durch Aussenwärme wieder erhitzt und auf Ausgangsdruck und Ausgangstemperatur gebracht werden, und dass das Heliumgas bei der tiefsten Temperatur des Prozesses in einem rechtsläufigen Kreisprozess durch Aussenwärme wieder erhitzt und auf Ausgangsdruck und Ausgangstemperatur gebracht wird.

Ansp.30) Verfahren und Anlagen gemäß Anspruch 19, dadurch gekennzeichnet, daß statt jeweils verschiedener Arbeitsmedien bestimmte bevorzugte Arbeitsmedien für mehrere oder für alle Teilprozesse verwendet werden.

Ansp.31) Verfahren nach Anspruch 30, dadurch gekennzeichnet, daß in den Teilanlagen die Vorrichtungen für isothermische Expansion oder isothermische Kompression in der gleichen Temperaturhöhe durch Wärmetauscher miteinander verbunden sind.

Ansp.32) Verfahren und Anlagen gemäß einem oder mehreren der vorhergehenden Ansprüche dadurch gekennzeichnet, daß in den T,s-Diagrammen der Arbeitsmedien anstatt oder neben den Isobaren als Prozeßverlauf I s o c h o r e n gewählt werden.

Ansp.33) Verfahren und Anlagen nach Anspruch 32, dadurch gekennzeichnet, daß die für Isochoren-Verlauf gegebene Bedingung des konstanten Volumens dadurch erfüllt wird, daß der Zufluß von Arbeitsmedium in eine Isochorenstufe und der Abfluß von Medium aus dieser Stufe auf das möglichst genau gleiche Ausmaß eingestellt werden.

Ansp. 34) Verfahren und Anlagen nach Anspruch 32 oder 33, dadurch gekennzeichnet, daß die Entspannung des gasförmigen Arbeitsmediums bis knapp oberhalb des Sättigungsgebietes durchgeführt und das Medium dann in die Isobaren- oder Isochoren-Linie geleitet wird, in welcher auch der Ausgangspunkt in der höchsten Temperaturstufe des Kreisprozesses liegt.

Ansp. 35) Verfahren und Anlagen nach Anspruch 32 oder 33, dadurch gekennzeichnet, daß das entspannte Arbeitsmedium durch das Sättigungsgebiet geführt wird, von wo aus die Weiterleitung des Mediums unmittelbar oder über den kritischen Punkt in die gewählte Isobaren- oder Isochoren-Linie erfolgt, in der auch der Ausgangspunkt in der höchsten Temperaturstufe des Kreisprozesses liegt.

Ansp. 36) Verfahren und Anlagen nach einem oder mehreren der vorhergehenden Ansprüche, dadurch gekennzeichnet, daß Helium, Wasserstoff, Neon, Argon, Stickstoff, trockene Luft oder Gemische dieser Gase als Arbeitsmedien bevorzugt ausgewählt werden.

Ansp. 37) Thermodynamische Anlage zur Erzeugung von unabhängiger Kälte, dadurch gekennzeichnet, daß ein rechtsläufiger Kreisprozeß mit einem linksläufigen Kreisprozeß so kombiniert werden, daß jeder einzelne für sich durch eine adiabatische Expansionsmaschine Kälte erzeugt, und daß ferner die Möglichkeit vorgesehen ist, die beiderseitigen isochorisch verlaufenden Leitungsstränge zum Wärmetausch mit den Kompressionssträngen des anderen Teiles zu koppeln.

Ansp. 38) Thermodynamische Anlage zur Erzeugung von unabhängiger Kälte nach Anspruch 37, dadurch gekennzeichnet, daß bei solchen Anlagen Sammelbehälter von kaltem Gas mit dem Wärmetauscher einer bestimmten Temperaturstufe des Hauptprozesses so gekoppelt werden, daß durch Thermostat der Zufluß von kaltem Gas zum Wärmetauscher so geregelt wird, daß die eingestellte Temperatur des Wärmetauschers automatisch konstant gehalten wird.

Ansp. 39) Wärme-Rohr (heat pipe) mit Kapillar-Struktur, dadurch gekennzeichnet, daß die Zylinderwand (Zw) des Wärme-Rohres (Gw) eine flachgedrückte oder ovale Form hat und daß zwischen Gehäusewand (Gw) und Zylinderwand (Zw) viele kleine geschlossene Wärme-Rohre (Wr) mit Docht-Kapillaren eingefügt werden.

Ansp. 40) Wärme-Rohre nach Anspruch 39, dadurch gekennzeichnet, daß die Rohrwände (Rw) der kleinen Wärmerohre (Wr) mit Löchern (Lo) versehen sind.

T,s-Diagramm von Helium

Fig.3

Fig.4

Fig.5

Fig.6

# Fig. 7

T.s - Diagramm von Helium

Fig. 8

T,s-Diagramm von Helium

Fig.9

T,s-Diagramm von Helium

Fig.11

Fig. 10 — T,s-Diagramm von Helium

T,s-Diagramm von Helium

Fig.12

0001382

Fig. 13

T,s-Diagramm von Stickstoff (N₂)

# Fig. 14

T,s-Diagramm von Stickstoff (N₂)

Fig. 15

T,s-Diagramm von Stickstoff (N₂)

## Fig.16

Do   →XVII   Gw

Zw

Gw   →XVII   Do

Kb

## Fig.17

Do   Gw   XVI

Zw

Kb

Gw   Do   XVI

## Fig.18

Wr   →XIX   Gw

Zw

Do

Kb

Wr   Wr

Do   →XIX   Gw

## Fig.19

Do   Wr   XVIII   Gw

Zw

Kb

Gw   Wr XVIII   Do

## Fig.20

Lo   Do   Wr   Rw   Lo

Lo

Lo   Rw   Do   Lo

Fig. 21 — T,s-Diagramm von Helium

0001382 — 13/13